# EUROPEAN PATENT SPECIFICATION

(11) **EP 2 840 783 B1**
(45) Date of publication and mention of the grant of the patent: **28.06.2017**
(21) Application number: 13778777.6
(22) Date of filing: 18.04.2013
(51) Int. Cl.: H04N 7/173, H04N 21/462, G06F 17/30, H04N 21/482

(54) **CONTENT MANAGEMENT APPARATUS, CONTENT MANAGEMENT METHOD, PROGRAM, AND CONTENT DISPLAY METHOD**
INHALTSVERWALTUNGSVORRICHTUNG, INHALTSVERWALTUNGSVERFAHREN, PROGRAMM UND INHALTSANZEIGEVERFAHREN
DISPOSITIF DE GESTION DE CONTENU, PROCÉDÉ DE GESTION DE CONTENU, PROGRAMME ET PROCÉDÉ D'AFFICHAGE DE CONTENU

(30) Priority: 20.04.2012 JP 2012096349
(43) Date of publication of application: 25.02.2015
(73) Proprietor: Panasonic Intellectual Property Corporation of America, Torrance, CA 90503 (US)
(72) Inventor: SASAKI, Takamitsu, Chuo-ku, Osaka 540-6207 (JP)
(74) Representative: Vigand, Philippe
(86) International application number: PCT/JP2013/002626
(87) International publication number: WO 2013/157268

(56) References cited:
- WO-A1-2009/157340
- JP-A- 2003 199 028
- JP-A- 2009 124 383
- JP-A- 2011 048 510
- US-A- 6 134 585
- US-A1- 2006 056 519
- US-A1- 2011 052 086
- US-A1- 2012 215 882

## Description

### [Technical Field]

The present invention relates to a content management apparatus, a content management method, a program, and a content display method.

### [Background Art]

In recent years content files are stored in various devices, such as personal computers, digital cameras, and camcorders. In order to overcome the inconvenience of managing stored content files, home server products are used to obtain lists of content files stored in each of the devices and consolidate the content files. A home server and a client device are connected with each other via a network including an Ethernet (registered trademark) cable and a wireless local area network (LAN). Through such a network, the home server obtains a content list from each client device. Hereinafter, a device from which the home server obtains a content list is referred to as client device. Furthermore, the content list for the home server to consolidate multiple content information items is referred to as consolidating list.

The home server provides a consolidating list which combines content lists obtained from multiple client devices. With reference to the consolidating list, a user can manage content files stored in each of the client devices in an integrated manner, and access a content file stored in each of the client devices. One of conventional techniques to create a consolidating list is to organize multiple content information items into a list (see PTL 1, for example). Moreover, one of such techniques to organize multiple content information items is to group and manage the content files in a consolidating list by time stamp and resolution in recording (see PTL 2, for example). In addition, there is a typical technique to group content files by time of creation and time of edit (see PTL 3, for example).

### [Citation List]

### [Patent Literature]

[PTL 1] Japanese Unexamined Patent Application Publication No. 2004-227444
[PTL 2] Japanese Unexamined Patent Application Publication No. 2003-199028
[PTL 3] Japanese Patent No. 4643735

Document US-A1-2011/052086 describes an electronic device (e.g. a personal computer) that classifies A/V contents stored in a local database into categories based on attribute information about the stored contents.

Document JP-A1-2012/215882 describes a system displaying an electronic album wherein pictures are organized into groups such that pictures taken the same date or within a predetermined interval of time are grouped into a same group.

### [Summary of Invention]

### [Technical Problem]

The conventional consolidating lists for grouping multiple content information items, however, are not sufficiently organized for a user to view.

The present invention is conceived in view of the above problem and aims to provide a content management apparatus and the like which are capable of providing a highly organized consolidating list for a user.

### [Solution to Problem]

In order to achieve the above aim, it is provided a content management apparatus and a content management method according to the respective appended claims 1 and 12.

The general and specific aspect may be implemented using a system, a method, an integrated circuit, a computer program, or a computer-readable recording medium such as a CD-ROM, or any combination of systems, methods, integrated circuits, computer programs, or computer-readable recording media.

### [Advantageous Effects of Invention]

A content management apparatus and the like according to an implementation of the present invention are capable of providing a highly organized consolidating list for a user.

### [Brief Description of Drawings]

[Fig. 1] FIG. 1 shows an overall structure according to an embodiment.
[Fig. 2] FIG. 2 shows a main structure of a content management server according to the embodiment.
[Fig. 3] FIG. 3 shows a main structure of a client device according to an embodiment.
[Fig. 4] FIG. 4 shows how a content file list in a first client device according to the embodiment is organized.
[Fig. 5] FIG. 5 shows how a content file list in a second client device according to the embodiment is organized.
[Fig. 6] FIG. 6 shows how a consolidating list according to the embodiment is organized.
[Fig. 7] FIG. 7 shows an example of how the consolidating list according to the embodiment is displayed.
[Fig. 8] FIG. 8 shows how a consolidating list according to the embodiment is organized.
[Fig. 9] FIG. 9 shows an example of how a consolidating list according to the embodiment is displayed.
[Fig. 10] FIG. 10 shows how a content file list in the first client device according to the embodiment is organized.
[Fig. 11] FIG. 11 shows how a content file list in the second client device according to the embodiment is organized.
[Fig. 12] FIG. 12 shows how a consolidating list according to the embodiment is organized.
[Fig. 13] FIG. 13 shows an example of how a consolidating list according to the embodiment is displayed.
[Fig. 14] FIG. 14 shows how a consolidating list according to the embodiment is organized.
[Fig. 15] FIG. 15 shows an example of how a consolidating list according to the embodiment is displayed.
[Fig. 16] FIG. 16 depicts a flowchart showing an example of how a content management server creates a consolidating list according to the embodiment.
[Fig. 17] FIG. 17 shows how a client device managing list according to the embodiment is organized.
[Fig. 18] FIG. 18 depicts a flowchart showing an example of a process from the determination of a content file to be reproduced, with reference to a consolidating list in a content management server, to the reproduction of the determined content file.
[Fig. 19A] FIG. 19A shows another example of how a consolidating list is displayed.
[Fig. 19B] FIG. 19B shows still another example of how a consolidating list is displayed.
[Fig. 20] FIG. 20 shows an example of how a client device displays a consolidating list.

### [Description of Embodiment]

### [Underlying Knowledge Forming Basis of the Present Invention]

Inventors of the present invention have had a thorough study over conventional techniques.

For example, PTL 1 discloses a data file to organize distribution destinations for each content file. More specifically, the data file groups content files having a common title, registered user, kind of distribution and kind of content file as a single content file. Here, only title corresponds to metadata to show details of the content file.

The data file disclosed in PTL 1, however, fails to group content files in the case where the content files have different registered users, kinds of distribution, and kinds of content file even though the content files have the same title (metadata showing details of the content files). For a user who desires to consolidate content files based on the details of the content files, such a data file is not either highly organized or convenient.

PTL 2 discloses a consolidating list which groups content files by time stamp and resolution in recording. PTL 3 discloses a technique to group content files by time of creation and date of edit and organize the groups in a consolidating list.

However, the technique disclosed in PTL 2 merely groups content files having the same time stamp and resolution in recording and the technique disclosed in PTL 3 merely groups content files having the same time of creation and time of edit. In other words, the techniques in PTL 2 and PTL 3 could group content files by time stamp, resolution in recording, time of creation, and time of edit; however, the techniques fail to group the content files by the same details. Consequently, the content files having the same details are redundantly listed in a consolidating list.

As described above, a conventional consolidating list is regarded as merely grouping content files having the same metadata. Hence, such a conventional consolidating list cannot group content files having different resolutions even though the content files have the same title. In other words, content files having the same title but different resolutions are inevitably listed in the consolidating list as different content files with each other. Hence, conventional consolidating lists could redundantly list content files having the same details. For a user who desires to consolidate content files based on the details of the content files, such consolidating lists are not either highly organized or convenient.

The inventors of the present invention have found out the following: When predetermined metadata aspects among metadata aspects are the same even though the metadata items themselves are different from each other, the predetermined metadata aspects can be handled as aspects which belong to the same group. Here, the metadata aspects in the same group may include, for example, a metadata aspect indicating detail, a metadata aspect indicating content quality, and a metadata aspect indicating stable distribution of content. When content files are pictures, for example, metadata aspects such as file name, capturing date and time, capturing appliance, picture modification date and time, are different from each other as metadata aspects; however, such metadata aspects can be grouped in a metadata aspect indicating detail. When content files are moving images, for example, metadata aspects such as resolution and bit rate are different from each other as metadata aspects; however, the metadata aspects can be grouped in a metadata aspect indicating image quality. The inventers have then found out and arrived at the present invention that when content files are organized for each metadata aspect into which one or more metadata aspects are grouped, the content files are more highly organized than those organized merely for the same metadata item as disclosed in the conventional techniques.

The present invention is conceived in view of the above problem and aims to provide a content management apparatus and the like which are capable of providing a highly organized consolidating list for a user.

In order to achieve the above aim, a content management apparatus according to an implementation of the present invention manages a list of audio and visual (AV) content files including at least one of an image, audio, and a moving image. The content management apparatus includes: a metadata classifying unit which classifies metadata aspects of the AV content files included in the list into one or more groups based on details indicated by the metadata aspects; a consolidating list creating unit which creates a consolidating list which groups entities of the AV content files indicated in the list and consolidates the grouped entities, based on a metadata aspect which belongs to at least one of the one or more groups classified by the metadata classifying unit; and an output unit which outputs the consolidating list.

Thanks to the features, the content management apparatus can group, from the user's point of organization in a consolidated manner, metadata aspects of AV content files listed on a content file list obtained from each of multiple device including a host device (content managing apparatus), and organize the AV content files for each group of the metadata aspects. Consequently, the AV content files can appear more organized in a consolidated manner. Hence, the content management apparatus can provide an organized consolidating list for the user.

The metadata classifying unit may classify, into the one or more groups, the metadata aspects of the AV content files as: a detail metadata aspect forming a group of a metadata aspect indicating the details of the AV content files; a quality metadata aspect forming a group of a metadata aspect indicating reproduction quality of the AV content files; and a group of a metadata aspect other than the detail metadata aspect and the quality metadata aspect.

Thanks to the feature, the content management apparatus groups metadata aspects of AV content files listed on (included in) a content file list obtained from each of multiple device including a host device (content managing apparatus). The metadata aspects are grouped into the following aspects: the detail metadata aspect indicating the details of the AV content files; the quality metadata aspect indicating the reproduction quality of the AV content files; and a group of a metadata aspect other than the detail metadata aspect and the quality metadata aspect. The content management apparatus then organizes the AV content files for each group of the metadata aspects. Such features allow the content management apparatus to organize the AV content files in a more consolidated manner.

For example, the metadata aspects of the AV content files are classified into the detail metadata aspect and the quality metadata aspect, and the AV content files are grouped based only on the detail metadata aspect. Hence, even though the AV content files differ from each other in values of metadata aspects other than the detail metadata aspect, the provided consolidating list includes the AV content files organized in the same group as the ones having the same details. Thus, in the consolidating list, AV content files for each of the groups definitely differ from each other in details. The AV content file having the same details belong to the same group, and are not redundantly listed in another group. Consequently, the content management apparatus can provides a highly organized and convenient consolidating list.

The detail metadata aspect may belong to at least one of the one or more groups.

The detail metadata aspect may include at least one of the metadata aspects of the AV content files including file name, capturing date and time, capturing camera, modification date and time, title, channel name, and recording date and time.

Such features allow at least one of file name, capturing date and time, capturing camera, modification date and time, title, channel name, and recording date and time to be grouped as the detail metadata aspect, which makes it possible to organize AV content files as a group of the detail metadata aspect. Hence, the content management apparatus can organize the AV content files in a more consolidated manner.

The quality metadata aspect may include at least one of the metadata aspects of the AV content files including resolution and bit rate.

Such a feature allows at least one of resolution and bit rate to be grouped as the quality metadata aspect, which makes it possible to organize AV content files as a group of the quality metadata aspect. Hence, the content management apparatus can organize the AV content files in a more consolidated manner.

The consolidating list creating unit may create the consolidating list by grouping into a single group content files at least part of which values in a metadata aspect included in the detail metadata aspect match each other. The consolidating list creating unit may create the consolidating list by grouping, into a single group, AV content files whose values in a metadata aspect included in the detail metadata aspect match each other, the grouped AV content files being included in the AV content files.

Such features make it possible to group, into a single group, AV content files at least part of which values in metadata aspects grouped as the detail metadata aspect. In the created consolidating list, the AV content files are grouped and organized in a consolidated manner. Hence, the content management apparatus can organize the AV content files in a more consolidated manner.

The content management apparatus may include a reproduction content file determining unit which determines an AV content file to be reproduced from among two or more AV content files grouped in a single group and included in the AV content files listed on the consolidating list created by the consolidating list creating unit, based on values indicated in a metadata aspect included in the quality metadata aspect and each corresponding to one of the two or more AV content files.

When a user selects a content file which he or she desires to reproduce from the consolidating list, for example, such feature makes it possible to automatically reproduce, based on a metadata aspect indicating quality of AV content files, the content file having the highest quality from among multiple AV content files organized in a single group based on a metadata aspect indicating the details of the AV content files. In other words, when the user reproduces an AV content file listed on the consolidating list, the user can eliminate the need of extra time and effort for checking the quality of each of multiple AV content files listed as candidates for reproduction and for actually selecting an AV content file to be reproduced. Without such extra time and effort, the reproduced AV content file has the highest image quality.

The content management apparatus may include a reproduction content file determining unit which determines an AV content file to be reproduced from among two or more AV content files grouped in a single group and included in the AV content files listed on the consolidating list created by the consolidating list creating unit, based on information on distribution stability of devices each storing one of the two or more AV content files.

When the user selects an AV content file which he or she desires to reproduce from the consolidating list, for example, such a feature makes it possible to automatically reproduce, based on information on distribution stability of devices, the AV content file available for the most stable distribution from among multiple AV content files organized in a single group based on a metadata aspect indicating the details of AV content files. In other words, when the user reproduces an AV content file listed on the consolidating list, the user can eliminate the need of time and effort for checking the distribution stability of each of the devices including a host device (content management apparatus) and for selecting an AV content file to be actually reproduced from among multiple AV content files listed as candidates for reproduction. Without such extra time and effort, the reproduced AV content file is the one available for the most stable distribution.

The information on the distribution stability may indicate at least one of performance and a status of each of the devices corresponding to the content management apparatus.

When the user selects an AV content file which he or she desires to reproduce from the consolidating list, for example, such a feature makes it possible to automatically reproduce, based on the information on at least one of a status and performance, the AV content file available for the most stable distribution from among multiple AV content files organized in a single group based on a metadata aspect indicating the details of AV content files. In other words, when the user reproduces an AV content file listed on the consolidating list, the user can eliminate the need of time and effort for checking the information on at least one of the status and performance of each of the devices including a host device (content management apparatus) and for selecting an AV content file to be actually reproduced from among multiple AV content files listed as candidates for reproduction. Without such extra time and effort, the reproduced AV content file is the one available for the most stable distribution.

The information on the distribution stability may indicate a status of a network between the content management apparatus and each of the devices corresponding to the content management apparatus.

When the user selects an AV content file which he or she desires to reproduce from the consolidating list, for example, such a feature makes it possible to automatically reproduce, based on the information on a status of a network between a host device (content management apparatus) and other devices, the AV content file available for the most stable distribution from among multiple AV content files organized in a single group based on a metadata aspect indicating the details of AV content files. In other words, when the user reproduces an AV content file listed on the consolidating list, the user can eliminate the need of time and effort for checking the information on a status of a network between the host device (content management apparatus) and the other devices and for selecting an AV content file to be actually reproduced from among multiple AV content files listed as candidates for reproduction. Without such extra time and effort, the reproduced AV content file is the one available for the most stable distribution.

The output unit may further include a content file reproducing unit which reproduces an AV content file included in the AV content files and listed on the consolidating list, and when an error occurs during the reproduction of an AV content file, the content file reproducing unit may reproduce, based on the detail metadata aspect, an other AV content file which belongs to a same group as the AV content file belongs to and differs from the AV content file.

When an error occurs during the reproduction of an AV content file, such a feature makes it possible to reproduce an AV content file which is different from the AV content file having the error and has the same details as the error-developing AV content file has.

The content file reproducing unit may start reproduction of the other AV content file at a point corresponding to a point of the error in the AV content file under the reproduction.

When an error occurs during the reproduction of an AV content file, such a feature makes it possible to reproduce an AV content file, which is different from the AV content file having the error and has the same details as the error-developing AV content file has, at a point corresponding to the error-occurring point (reproduction point). The reproduction point includes the point where the error has occurred (reproduction point) and a point which appeared a predetermined time period before the error-occurring point (reproduction point) appears.

The metadata classifying unit may classify the metadata aspects of the AV content files, based on definition information which defines a name for each of the metadata aspects indicating at least the details of the AV content files, and the definition information may be changed at any given time.

Such a feature makes it possible to freely change the definition information to be used for classifying metadata aspects. Hence, a displayed consolidating list meets the preference of the user.

The content management apparatus may further include a display control unit which performs control for displaying the consolidating list on a display.

Thanks to the features, the content management apparatus can group, from the user's point of organization in a consolidated manner, metadata aspects of AV content files listed on a content file list obtained from each of multiple devices including a host device, and organize the AV content files for each group of the metadata aspects. Hence, the content management apparatus can provide an organized consolidating list for the user.

Moreover, in order to achieve the above aim, a content display method according to an implementation of the present invention includes: receiving a consolidating list which is created based on a metadata aspect which is included in metadata aspects of AV content files classified into one or more groups and belongs to at least one of the one or more groups, and groups entities of the AV content files; and displaying the list of the AV content files, based on the received consolidating list.

Such features make it possible to show only one list which corresponds to AV content files that belong to the same group and have the same metadata aspects classified as the detail metadata aspect. For the user, the displayed consolidating list is visibly organized because the AV content files having the same details are not redundantly displayed.

When a selected list corresponds to only one of the AV content files, the displaying on the consolidated list may further include displaying, on a drop down list, the AV content files grouped in the same group.

Such a feature allows AV content files having the same details to be displayed on a drop down list. For the user, the displayed consolidating list appears visibly organized.

These general and specific aspects may be implemented using a system, a method, an integrated circuit, a computer program, or a computer-readable recording medium such as a CD-ROM, or any combination of systems, methods, integrated circuits, computer programs, or computer-readable recording media.

Described hereinafter are content management apparatuses according to an embodiment of the present invention, with reference to the drawings. In each of the drawings, the same constituent element has the same numerical signs.

It is noted that the embodiment below is a specific example of the present invention. The numerical values, shapes, materials, constituent elements, arrangement positions and connecting schemes of the constituent elements, steps, and an order of steps all described in the embodiment are examples, and shall not be defined as they are. Hence, among the constituent elements in the embodiment, those not described in an independent claim representing the most generic concept of the present invention are introduced to as given constituent elements.

### [Embodiment]

As an example, the embodiment describes a content management server which obtains content files stored in the client devices from two client devices lists, and consolidates the lists.

It is noted that the content management server and the client devices in the embodiment are an example of a content management apparatus. Specific examples of the content management server and a client device may include, but not limited to, personal computers (PC), digital cameras, camcorders, cellular phones, tablet terminals, and Web servers. Moreover, the kinds of content files in a content file list may any kind of file such as an image, a moving image, a text message, and thus shall not be limited to one of these.

In addition, there are two client devices in the embodiment; however, there are may be two or more client devices for use and the number of the client devices shall not be limited.

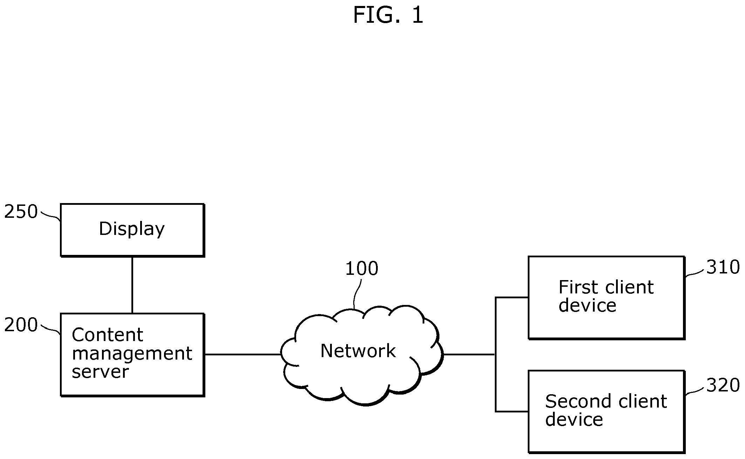

FIG. 1 shows an overall structure according to an embodiment.

A content management server 200 is an example of the content management apparatus that manages a list of AV content files including at least one of an image, audio, and a moving image.

As shown in FIG. 1, the content management server 200 obtains via a network 100 a content file list from two client devices (hereinafter referred to as client device 300) including a first client device 310 and a second client device 320. The content management server 200 includes a display 250 to show content lists obtained from the first client device 310 and the second client device 320. Furthermore, the content management server 200 reproduces and displays on the display 250 a content file stored in one of the first client device 310 and the second client device 320.

For example, the network 100 is such as a wired and wireless network, or a communications cable. In the embodiment, the network 100 is described as a network connected with a wireless LAN.

It is noted that the content management server 200 may be provided on an in-house LAN or connected to the Internet. For example, in the case where it is previously known that most of client devices 300 are provided on the in-house LAN, the content management server 200 may be provided on the in-house LAN.

Here, the content management server 200 and the client devices 300 can directly hold communications with each other on the LAN without passing through another network 100. The content management server 200 can thus obtain a content file list more smoothly from a client device 300. Here, an in-house TV may be used as the display 250. Moreover, the content management server 200 may operate as a home server.

In addition, for example, when a user operates the content management server 200 out of the house via the Internet, the content management server 200 may be connected on the Internet. The user can operate the content management server 200 anytime anywhere as far as he or she has an access to the Internet. The user may operate the display of his or her tablet terminal as the display 250. The content management server 200 may work as a server to provide cloud services.

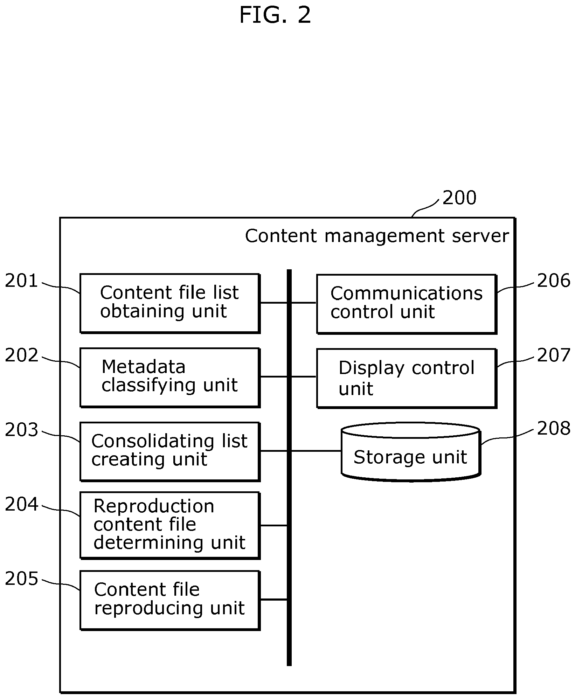

FIG. 2 shows a main structure of the content management server 200 according to the embodiment. As shown in FIG. 2, the content management server 200 includes a content file list obtaining unit 201, a metadata classifying unit 202, a consolidating list creating unit 203, a reproduction content file determining unit 204, a content file reproducing unit 205, a communications control unit 206, a display control unit 207, and a storage unit 208. It is noted that the content file reproducing unit 205, the communications control unit 206, and the display control unit 207 are an example of an output unit, and the output unit outputs a consolidating list.

The content file list obtaining unit 201 obtains a content file list from the client device 300. The example in FIG. 1 shows that the content file list obtaining unit 201 obtains a content file list from each of the first client device 310 and the second client device 320.

The metadata classifying unit 202, for example, classifies metadata aspects, of AV content files included in an obtained list, into one or more groups based on details indicated in the aspects. Specifically, the metadata classifying unit 202 classifies the metadata aspects of the AV content files into the following one or more groups: a detail metadata aspect showing an a group of metadata aspects which indicates the details of the AV content files; a quality metadata aspect showing a group of metadata aspects which indicates the reproduction quality of the AV content files; and another group of aspects indicating metadata other than the above metadata. It is noted that the metadata classifying unit 202 classifies the metadata aspects of AV content files based on definition information which defines a name for each of the metadata aspects indicating at least the details of the AV content files. The definition information may be changed at any given time.

More specifically, the metadata classifying unit 202 analyzes the metadata aspects of a content file listed in an obtained content file list, and classifies the aspects into a metadata aspect indicating the details of the content file (hereinafter referred to as "details metadata aspect"), a metadata aspect indicating the reproduction quality of the content file (hereinafter referred to as "quality metadata aspect"), and a metadata aspect other than the above metadata. One technique for analyzing metadata aspects is, for example, to previously store in the storage unit 208 the definition information and refer to the definition information. The definition information uses the name of a metadata aspect to define that the aspects, of various kinds of metadata items, to be assigned to a content file correspond to which one of the detail metadata aspect, the quality metadata aspect, and a metadata aspect other than the detail metadata aspect and the quality metadata aspect. As described above, the metadata classifying unit 202 classifies the metadata aspects of content files listed in the obtained list into one or more groups based on the details indicated in the aspects.

It is noted that the detail metadata aspect includes at least one of the metadata aspects of the AV content files including file name, capturing date and time, capturing camera, modification date and time, title, channel name, and recording date and time of an AV content file. In addition, the quality metadata aspect includes at least one of the metadata aspects of the AV content files including resolution and bit rate. Details of the above aspects are described later and shall be omitted here.

The consolidating list creating unit 203 for example creates a consolidating list which groups entities (rows of a list, for example) of AV content files indicated in a list and consolidates the grouped entities, based on a metadata aspect which belongs to at least one of one or more groups classified by the metadata classifying unit 202. Here, the detail metadata aspect belongs to at least one of the one or more groups. Moreover, the consolidating list creating unit 203 creates a consolidating list by grouping into a single group content files at least part of which values in a metadata aspect included in the detail metadata aspect match each other. Here, the consolidating list creating unit 203 may create the consolidating list by grouping, into a single group, AV content files whose values in a metadata aspect included in the detail metadata aspect match each other.

More specifically, the consolidating list creating unit 203 creates a consolidating list into which multiple content file lists obtained by the content file list obtaining unit 201 are combined and the entities of AV content files indicated in the obtained list are grouped (consolidated). Here, the consolidating list is created based on a group (group of metadata aspects) formed by the metadata classifying unit 202. Specifically, based on the detail metadata aspect formed by the metadata classifying unit 202, the consolidating list creating unit 203 groups and organizes content files, among the content files listed in the consolidating list, whose values in the detail metadata aspect are the same. Hence, the consolidating list is formed of multiple content lists combined into one. A feature of the consolidating list is that the grouped content files have in common at least the same detail metadata aspect.

The reproduction content file determining unit 204 for example determines an AV content file to be reproduced from among two or more AV content files grouped in a single group and included in the AV content files and listed on the consolidating list created by the consolidating list creating unit 203, based on values indicated in a metadata aspect included in quality metadata aspects each corresponding to one of the two or more AV content files. Here, the reproduction content file determining unit 204 may determine an AV content file to be reproduced from among two or more AV content files (i) included in the AV content files in the consolidating list created by the consolidating list creating unit 203 and (ii) grouped into the same group, based on information on the distribution stability of devices (such as client devices) each storing one of the two or more AV content files. Here, the information on the distribution stability may indicate (i) at least one of performance and a status of each of the devices corresponding to the content management apparatus, or (ii) a status of a network between the content management apparatus and each of the devices corresponding to the content management apparatus.

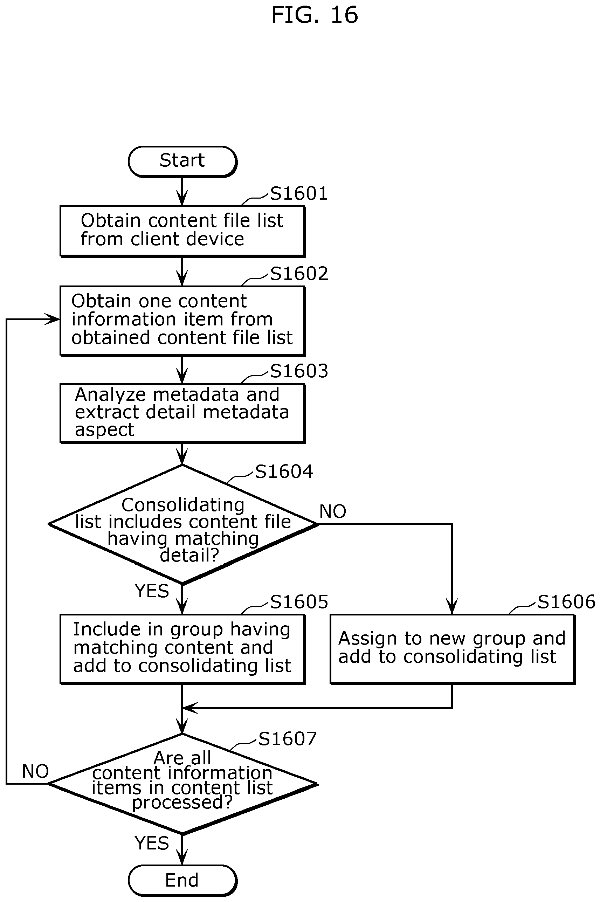

More specifically, when multiple content files are grouped and the user selects, from the consolidating list that displays one representing content file per a single group, one of the content files displayed as candidates to be reproduced, the reproduction content file determining unit 204 determines a content file to be reproduced from among the grouped multiple contents based on the quality metadata aspect formed by the metadata classifying unit 202. Moreover, the reproduction content file determining unit 204 determines a content file to be reproduced based on the distribution readiness and the distribution performance of a client device 300 which stores each content files, and the status of a network between a client device 300 and the content management server 200, as well as based on the quality metadata aspect. The distribution readiness and the distribution performance of a client device 300 and the status of the network between a client device 300 and a content management server 200 are used as indicators to show whether or not a content file can be stably distributed from the client device 300, and are referred to as metadata to indicate distribution stability (hereinafter referred to as "distribution stability metadata aspect"). The distribution stability metadata aspect is listed in an after-described client device managing list 1700 in FIG. 16.

The content file reproducing unit 205 for example reproduces an AV content file listed on the consolidating list.

Specifically, the content file reproducing unit 205 reproduces a content file stored in a client device 300 and displays the content file on the display 250. The example in FIG. 1 shows that the client device 300 is one of the first client device 310 and the second client device 320.

When an error occurs during the reproduction of an AV content file, the content file reproducing unit 205 reproduces, based on the detail metadata aspect, an other AV content file which belongs to a same group as the AV content file belongs to and differs from the AV content file. Here, the content file reproducing unit 205 may start reproduction of the other AV content file at a point corresponding to a point of the error in the AV content file under the reproduction. The details thereof shall be described later.

The communications control unit 206 controls communications which the content management server 200 holds via the network 100.

The display control unit 207 performs control for displaying on the display 250 the consolidating list and a content file to be reproduced.

The storage unit 208 stores various kinds of information on the content management server 200. The information stored in the storage unit 208 includes the definition information used by the metadata classifying unit 202 for metadata analysis, the consolidating list, and the after-described client device managing list.

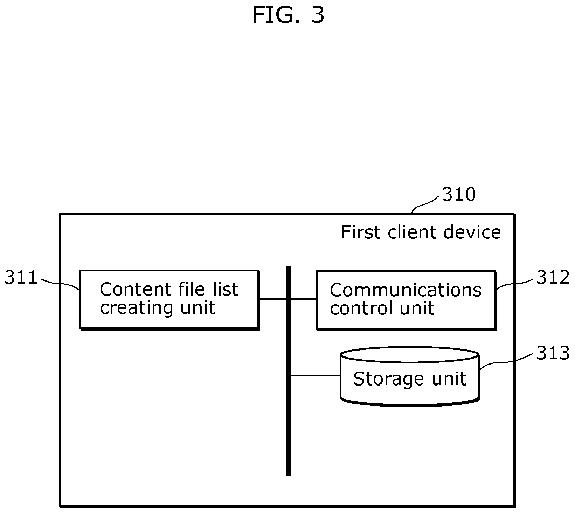

FIG. 3 shows a structure of the first client device 310 according to the embodiment. As shown in FIG. 3, the first client device 310 includes a content file list creating unit 311, a communications control unit 312, and a storage unit 313.

The content file list creating unit 311 creates a list of content files stored in the storage unit 313, and provides the list to the content management server 200.

The communications control unit 312 controls communications which the first client device 310 holds via the network 100.

The storage unit 313 stores various kinds of information on the first client device 310. The information stored in the storage unit 313 includes data of content such as an AV content file. Moreover, the storage unit 313 may store a content file list created by the content file list creating unit 311.

The structure of the second client device 320 is similar to that of the first client device 310, and the details thereof shall be omitted.

### [Example 1]

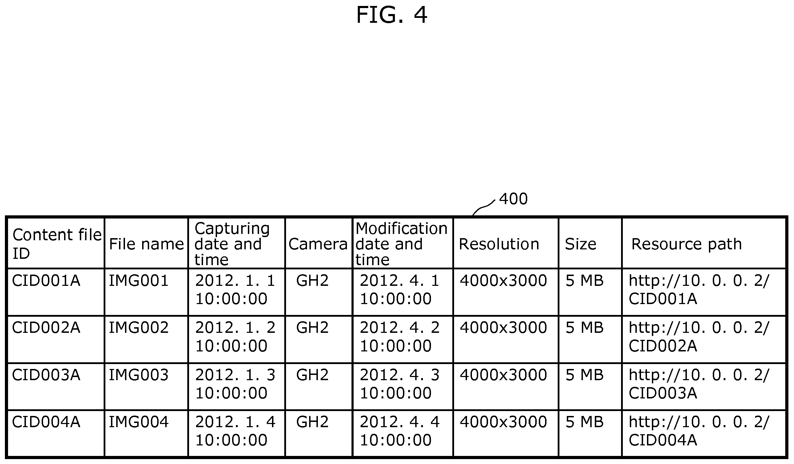

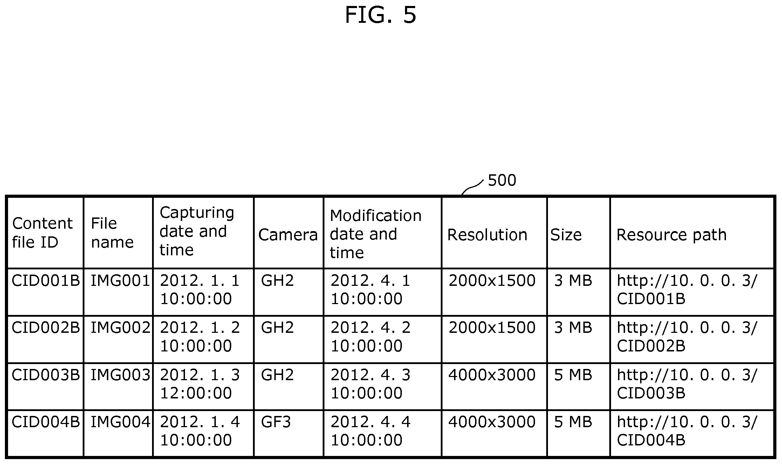

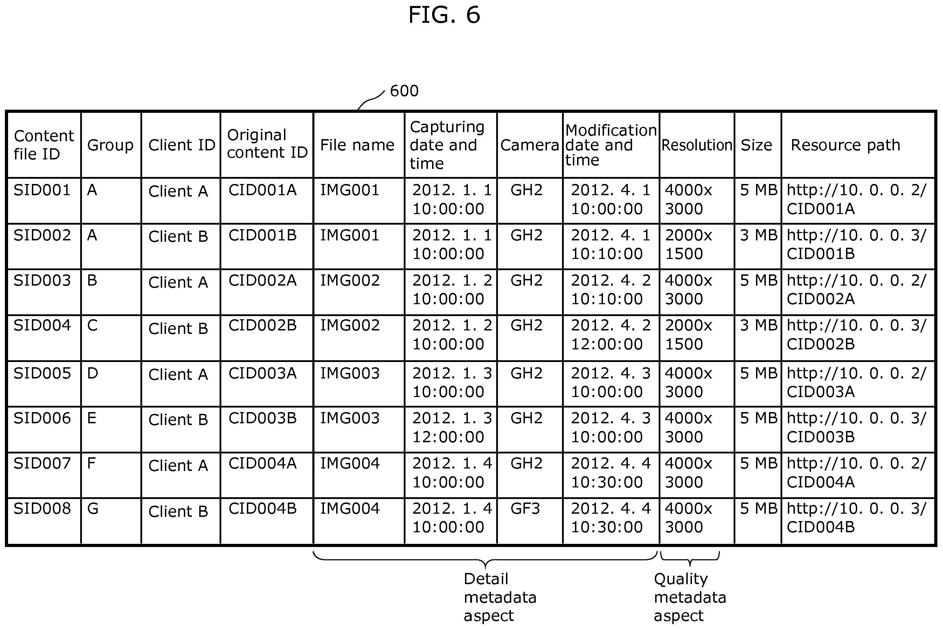

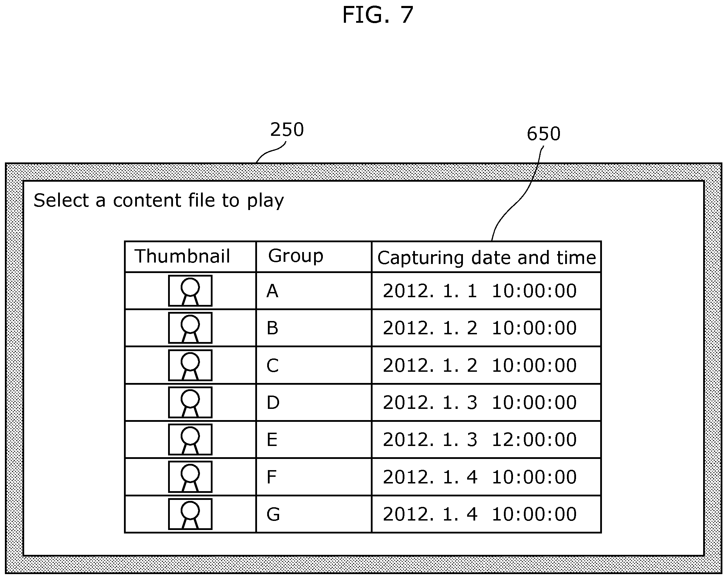

Described here is Example 1; that is, a specific example of a consolidating list created by the content management server 200. A content file list 400 in FIG. 4 is an example of a content file list included in the first client device 310. A content file list 500 in FIG. 5 is an example of a content file list included in the second client device 320. A consolidating list 600 in FIG. 6 is an example of a consolidating list created by the content management server 200 from the content file list 400 and the content file list 500. A consolidating list 650 in FIG. 7 is an example of how the content management server 200 displays the consolidating list 600 in FIG. 6 on the display 250. It is noted that the content files listed in the content lists 400 and 500 are pictures.

As shown in FIG. 4, the content file list 400 in the first client device 310 includes the following aspects: content file ID, file name, capturing date and time, camera, modification date and time, resolution, size, and resource path. Content file ID indicates an ID to uniquely identify a content file in the first client device 310. File name indicates the file name of a picture. Capturing date and time indicates when and what time the picture was taken. Camera indicates the name of the camera that the picture was taken with. Modification day is when and what time the picture was modified or edited. Resolution indicates the resolution of the picture. Size indicates the file size of the picture. Resource path indicates a uniform resource locator (URL) address used to access a content file via the network 100. In the content file list 400, for example, the content file CID001A has the file name of "IMG001", the capturing date and time of "january 1, 2012 at 10:00:00", the name of the camera that the picture was taken with of "GH2", the date and time when the picture was modified and edited of "April 1, 2012 at 10:00:00", the picture resolution of "4000 pixels in width and 3000 pixels in height", the file size of "five mega bytes (5MB)", and the URL address to access via the network 100 of "http://10.0.0.2/CID001A". It is noted that the content file list 400 may further include an aspect of thumbnail path which is not shown. Thumbnail path lists URLs to obtain thumbnails of pictures.

The content file list 500 in the second client device 320 in FIG. 5 is similar to the content file list 400 in FIG. 4, and the details thereof shall be omitted.

The consolidating list 600 in FIG. 6 includes the following aspects: content file ID, group, client ID, original content file ID, file name, capturing date and time, camera, modification day, resolution, size, and resource path. Content file ID indicates an ID to uniquely identify a content file in the content management server 200. Group indicates an ID to uniquely identify a group organizing content files having the same value in a metadata aspect classified under the detail metadata aspect. Client ID indicates an ID to uniquely identify a client device 300 which stores content files. Original content file ID indicates a content file ID listed in the content file list in the client device 300 where content files are stored. For example, in the consolidating list 600, a content file whose content file ID of "SID001" has the original client ID of "CID001A". Hence, the content file is the one on the content file list 400 in the first client device 310, and the content file ID is "CID001A". File name, capturing date and time, camera, modification day, resolution, size, and resource path are the same as those in the content file list 400 in FIG. 4. Thus, the details thereof shall be omitted. It is noted that the consolidating list 600 may include an aspect of thumbnail path which is not shown. Here, the thumbnail path of the consolidating list 600 has the same value of the not-shown thumbnail paths for the content file list 400 in the first client device 310 and the content file list 500 in the second client device 320.

Here, in the consolidating list 600 shown in FIG. 6, the detail metadata aspect includes aspects of file name, capturing date and time, camera, and modification date and time. In other words, the content files organized in the same group have the same values for the aspects of file name, capturing date and time, camera, and modification date and time (metadata aspects). For example, in the consolidating list 600, a content file with the content file ID of "SID001" and a content file with the content file ID of "SID002" have different values for the aspects of resolution and size (metadata aspects), but have the same values for the aspects of file name, capturing date and time, camera, and modification date and time (metadata aspects). The content files are organized in the same group "A". Hence, the consolidating list 600 has a feature that even though content files in the list have different values from each other for the aspects of resolution and size (metadata aspects), those files can be organized in the same group in the case where the content files have the same values for the detail metadata aspect such as file name, capturing date and time, camera, and modification date and time. Moreover, in the consolidating list 600 shown in FIG. 6, the quality metadata aspect is an aspect of resolution. When the user sends an instruction to reproduce a content file in a group, the reproduction content determining unit 204 determines, as the content to be reproduced, the content file having the highest quality from among the content files in the same group, based on the quality metadata aspect. A flow of processing shall be described later to show how the reproduction content determining unit 204 determines a content to file be reproduced.

The consolidating list 650 in FIG. 7 is an example when the content management server 200 displays the consolidating list 600 in FIG. 6 on the display 250. The consolidating list 650 in FIG. 7 is displayed as a list indicating the aspects of thumbnail, group, and capturing date and time. Thumbnail indicates a thumbnail image obtained using a thumbnail path of the consolidating list 650. Group and capturing date and time respectively indicate a group and a capturing date and time in the consolidating list 600. The consolidating list 650 in FIG. 7 does not show all the content files; instead, the consolidating list 650 shows just one of the content files for each group. For example, the consolidating list 600 in FIG 6 shows two content files listed in the group "A". The consolidating list 650 in FIG. 7, however, shows only one content file listed in the group "A". As described above, a feature of Example 1 is that when the consolidating list 600 is displayed on the display 250, displayed is only one of the content files which belong to the same group and have the same values for the metadata aspects classified as the detail metadata aspect. For the user, the consolidating list 650 is visibly organized because content files having the same details are not displayed twice or more.

### [Example 2]

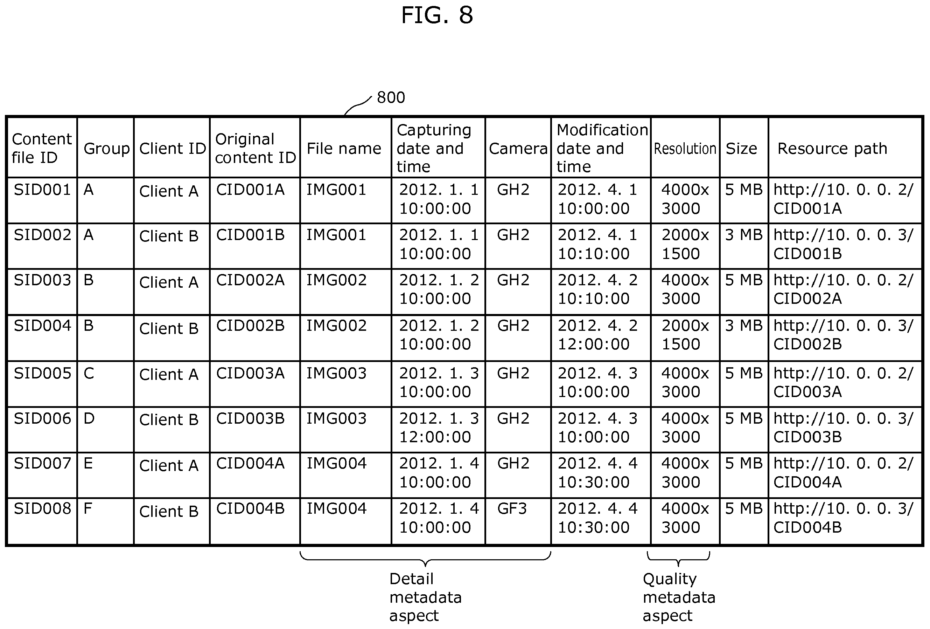

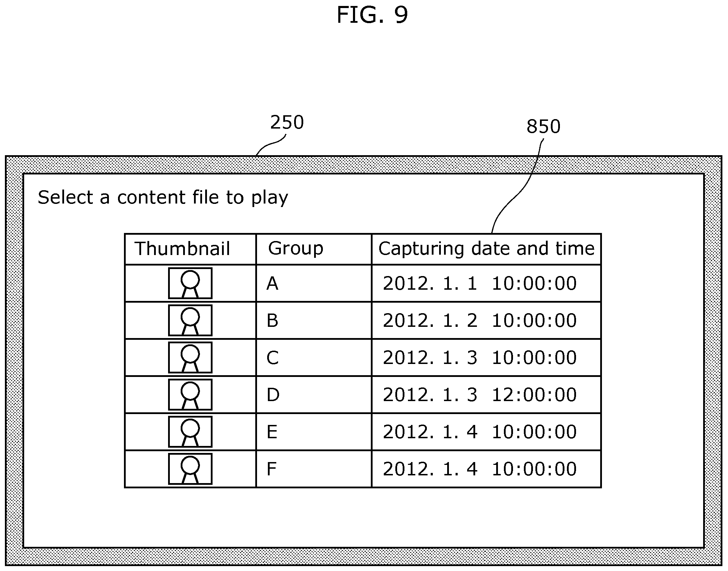

Next, with reference to FIGS. 8 and 9, described here is Example 2; that is, another specific example of a consolidating list which is different from the ones in FIGS. 6 and 7. A consolidating list 800 in FIG. 8 is another example of consolidating list created by the content management server 200 from the content file lists 400 and 500. A consolidating list 850 in FIG. 9 is an example when the content management server 200 displays the consolidating list 800 in FIG. 8 on the display 250.

The consolidating list 800 in FIG. 8 and the consolidating list 600 in FIG. 6 are the same in organization but different from each other in definition of the detail metadata aspect. In the consolidating list 800, the detail metadata aspect includes the aspects of file name, capturing date and time, and camera (metadata aspects). In other words, the content files organized in the same group have the same values for the aspects of file name, capturing date and time, and camera (metadata aspects). For example, in the consolidating list 800, a content file with the content file ID of "SID003" and a content file with the content file ID of "SID004" have different values for the aspects of modification date and time, resolution, and size (metadata aspects), but have the same values for the aspects of file name, capturing date and time, and camera (metadata aspects). The content files are organized in the same group "B". In contrast, in the consolidating list 600, the content file with the content file ID of "SID003" and the content file with the content file ID of "SID004" are respectively organized in the group "B" and the group "C". Hence, the consolidating list 800 has a feature that even though content files in the list have different values from each other for the aspects of modification date and time, resolution, and size (metadata aspects), those files can be organized in the same group in the case where the content files have the same values for the detail metadata aspect such as file name, capturing date and time, and camera. Moreover, in the consolidating list 800 shown in FIG. 8, the quality metadata aspect is an aspect of resolution as so in the consolidating list 600.

The consolidating list 850 in FIG. 9 is an example when the content management server 200 displays on the display 250 the consolidating list 800 in FIG. 8. The consolidating list 850 in FIG. 9 is displayed to show the aspects of thumbnail, group and capturing date and time; however, the number of content files to be displayed on the consolidating list 850 is different. This is because the number of groups on the consolidating list 800 is different. For the consolidating list 650 in FIG. 7, the consolidating list 600 in FIG. 6 shows seven content files from the groups "A" to "G". In contrast, the consolidating list 850 in FIG. 9 shows only six content files from the groups "A" to "F" among the groups in the consolidating list 800 in FIG. 8. Hence, when the name of a metadata aspect indicating the details of content files is defined and a definition of the detail metadata aspect changes, the content files in a consolidating list are organized in a different manner. Consequently, the number of content files to be displayed on the display 250 also changes.

An example of a definition of the detail metadata aspect is an initial definition which is previously set when the content management server 200 is shipped out. The initial definition may be, however, freely changed at any given time after the shipment, such as after the user has started using the content management server 200. For example, the user may operate the content management server 200 via a not-shown keyboard and an infrared controller to change the definition of the detail metadata aspect. The changed definition of the detail metadata aspect is stored in the storage unit 208 of the content management server 200, and used for an analysis later by the metadata classifying unit 202 of the metadata.

Hence, the user can control the details of a consolidating list displayed on the display 250 user by changing a definition of the detail metadata aspect as he or she wishes. In other words, the user can display a consolidating list of his or her preference. For example, suppose the same pictures are stored in the first client device 310 and the second client device 320. Then, suppose the user has modified the picture in the second client device 320 to adjust the color tone of the picture. The modification involves simply adjusting the color tone, and the user desires that the modified picture in the second client device 320 and the original picture of the first client device 310 would be organized on a consolidating list as the same picture and displayed on the display 250.

Here, suppose the user is viewing the consolidating list 600 in FIG. 6. In the consolidating list 600 of FIG. 6, the detail metadata aspect includes the aspects of file name, capturing date and time, camera and modification date and time (metadata aspects). The modified picture in the second client device 320 and the original picture in the first client device 310 are different from each other in the aspect of modification date and time, and these pictures cannot be organized in the same group. This is the case of content files having the content file IDs of "SID003" and "SID004" in the consolidating list 600, for example. Here, suppose the case where the user has changed the definition of the detail metadata aspect and deleted the aspect of modification date and time from the detail metadata aspect. The consolidating list with the aspect of modification date and time deleted is the consolidating list 800 in FIG. 8. In the consolidating list 800 in FIG. 8, the detail metadata aspect includes the aspects of file name, capturing date and time, and camera. Hence, the modified picture in the second client device 320 and the original picture in the first client device 310 are organized in the same group even though the pictures are different from each other in the aspect of modification date and time. This is the case of content files having the content file IDs of "SID003" and "SID004" in the consolidating list 800, for example. Hence, the user can freely change the definition of the detail metadata aspect, and a displayed consolidating list meets the preference of the user.

### [Example 3]

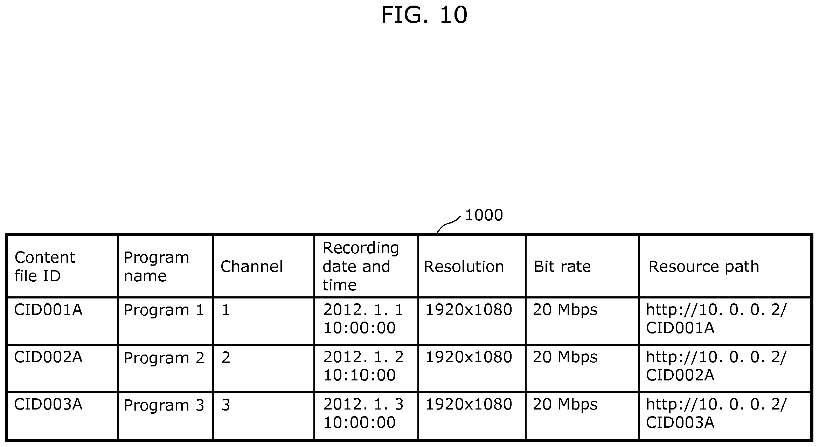

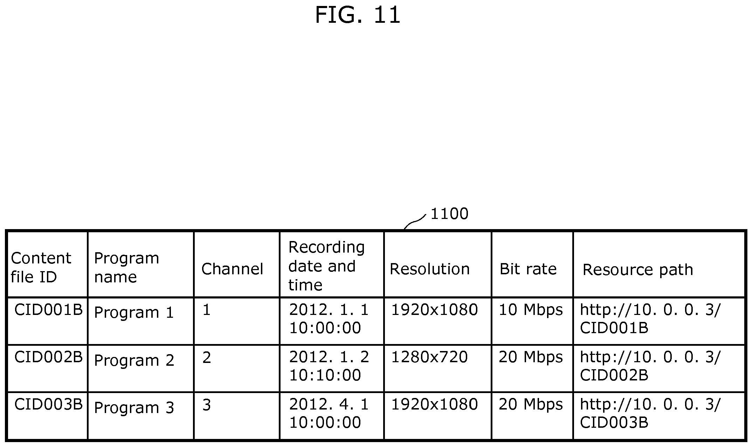

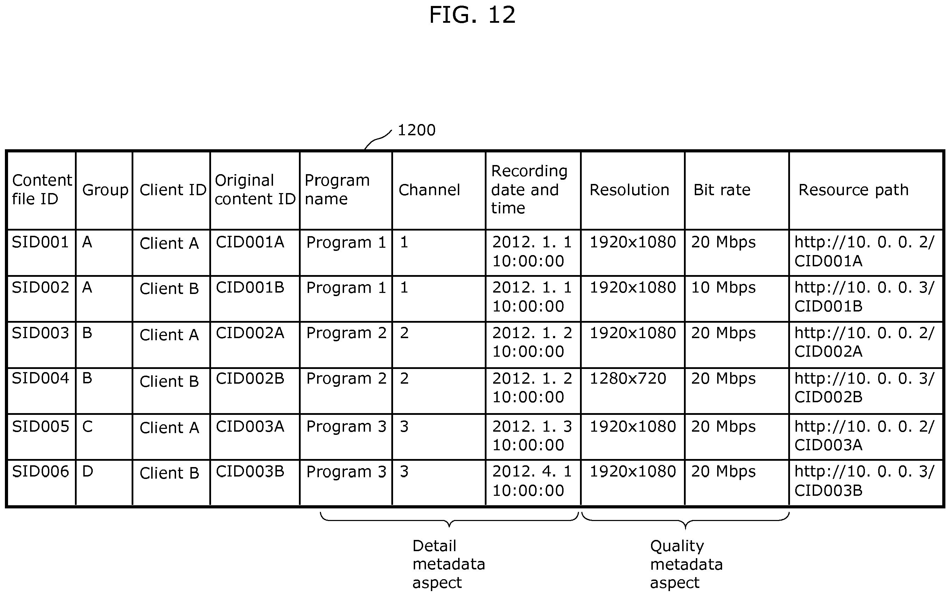

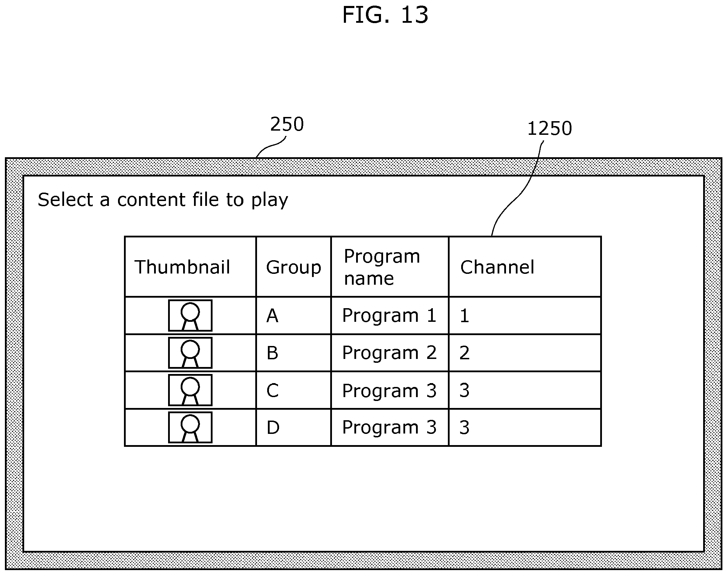

Next, with reference to FIGS. 10 to 13, described here is Example 3; that is, another specific example of a consolidating list created by the content management server 200. A content file list 1000 in FIG. 10 is an example of a content file list included in the first client device 310. A content file list 1100 in FIG. 11 is an example of a content file list included in the second client device 320. A consolidating list 1200 in FIG. 12 is an example of a consolidating list created by the content management server 200 from the content file lists 1000 and 1100. A consolidating list 1250 in FIG. 13 is an example when the content management server 200 displays the consolidating list 1200 in FIG. 12 on the display 250. It is noted that, in the examples, the content files listed in the content file lists 1000 and 1100 are recorded programs. In Example 1 with reference to FIGS. 4 to 7, the content files are pictures. Example 3 is significantly different from Example 1 in that the content files are recorded programs.

The content file list 1000 in the first client device 310 shown in FIG. 10 includes the following aspects: content file ID, program name, channel, recording date and time, resolution, bit rate, and resource path. Content file ID indicates an ID to uniquely identify a content file in the first client device 310.

Program name indicates the program name of a recorded program. Channel indicates the channel number on which the recorded program was broadcasted. Recording date and time indicates the date and time when the program was recorded. Resolution indicates the resolution of the recorded program. Bit rate indicates the bit rate of the recorded program. Resource path indicates a URL address used to access a content file via the network 100. In the content file list 1000, for example, the content file CID001A has the file name of "program 1", the channel of "1", the recording date and time of "January 1, 2012 at 10:00:00", the resolution of "1920 pixels in width and 1080 pixels in height", the bit rate of "29 mega bit per seconds (Mbps)", and the URL address to access via the network 100 of "http://10.0.0.2/CID001A". It is noted that the content file list 1000 may further include an aspect of thumbnail path which is not shown. Thumbnail path lists URLs to obtain thumbnails of recorded programs.

The content file list 1100 in the second client device 320 in FIG. 11 is similar to the content file list 1000 in FIG. 10, and the details thereof shall be omitted.

The consolidating list 1200 in FIG. 12 includes the following aspects: content file ID, group, client ID, original content file ID, program name, channel, recording date and time, resolution, bit rate, and resource path. Content file ID, group, client ID, and original content file ID are similar to those for the consolidating list 600 in FIG. 6, and the details thereof shall be omitted. Program name, channel, recording date and time, resolution, bit rate, and resource path are similar to those for the content file list 1000 in FIG. 10, and the details thereof shall be omitted. It is noted that the consolidating list 1200 may include an aspect of thumbnail path which is not shown. Here, the thumbnail path of the consolidating list 1200 has the same value of the not-shown thumbnail paths for the content file list 100 in the first client device 310 and the content file list 1100 in the second client device 320.

Here, in the consolidating list 1200 shown in FIG. 12, the detail metadata aspect includes aspects of program name, channel, and recording date and time (metadata aspects). In other words, the content files organized in the same group have the same values for the aspects of program name, channel, and recording date and time (metadata aspects). For example, in the consolidating list 1200, a content file with the content file ID of "SID001" and a content file with the content file ID of "SID002" have different values for the aspects of resolution and bit rate, but have the same values for the aspects of program name, recording date and time, and channel (metadata aspects). The content files are organized in the same group "A". Hence, the consolidating list 1200 has a feature that even though content files in the list have different values from each other for the aspects of resolution and bit rate, those files can be organized in the same group in the case where the content files have the same values for the detail metadata aspect such as program name, recording date and time, and channel. Moreover, in the consolidating list 1200 shown in FIG. 12, the quality metadata aspect includes the aspects of resolution and bit rate. When the user sends an instruction to reproduce a content file in a group, the reproduction content determining unit 204 determines, as the content to be reproduced, the content file having the highest quality from among the content files in the same group, based on the quality metadata aspect. A flow of processing shall be described later to show how the reproduction content determining unit 204 determines a content to file be reproduced.

A consolidating list 1250 in FIG. 13 is an example when the content management server 200 displays the consolidating list 1200 in FIG. 12 on the display 250. The consolidating list 1250 in FIG. 13 is displayed as a list indicating the aspects of thumbnail, group, program name, and channel. Thumbnail indicates a thumbnail image obtained using a thumbnail path of the consolidating list 1250. Group, program name, and channel in the consolidating list 1250 respectively indicate group, program name, and channel in the consolidating list 1200. The consolidating list 1250 in FIG. 13 does not show all the content files; instead, the consolidating list 1250 shows just one of the content files for each group, as so do the consolidating list 650 in FIG. 7 and the consolidating list 850 in FIG. 9. For example, the consolidating list 1200 in FIG 12 shows two content files listed in the group "A". The consolidating list 1250 in FIG. 13, however, shows only one content file listed in the group "A". As described above, a feature of Example 3 is that when the consolidating list 1200 is displayed on the display 250, displayed is only one of the content files which belong to the same group and have the same values for the metadata aspects classified as the detail metadata aspect. For the user, the consolidating list 1250 is easy to see and organized because content files having the same details are not displayed twice or more.

### [Example 4]

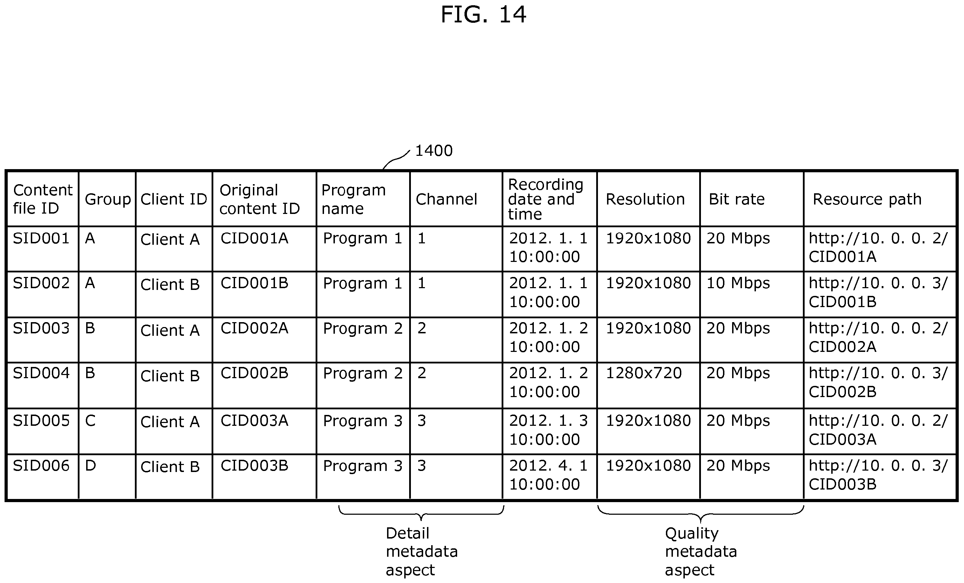

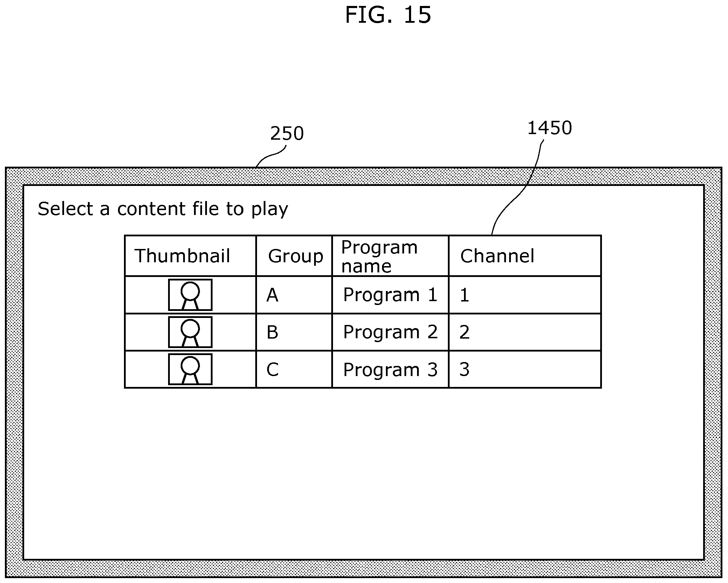

Next, with reference to FIGS. 14 and 15, described here is Example 4; that is, another specific example of a consolidating list which is different from ones in FIGS. 12 and 13. A consolidating list 1400 in FIG. 14 is another example of a consolidating list created by the content management server 200 from the content file list 1000 and the content file list 1100. A consolidating list 1450 in FIG. 15 is an example when the content management server 200 displays the consolidating list 1400 in FIG. 14 on the display 250.

The consolidating list 1400 in FIG. 14 and the consolidating list 1200 in FIG. 12 are the same in organization but different from each other in definition of the detail metadata aspect. In the consolidating list 1400, the detail metadata aspect includes the aspects of program name and channel (metadata aspects). In other words, the content files organized in the same group have the same values for the aspects of program name and channel (metadata aspects). For example, in the consolidating list 1400, a content file with the content file ID of "SID005" and a content file with the content file ID of "SID006" have the same values for the aspects of program name and channel (metadata aspects). The content files are organized in the same group "C". In contrast, in the consolidating list 1200 in FIG. 12, the content file with the content file ID of "SID005" and the content file with the content file ID of "SID006" are respectively organized in the group "C" and the group "D".

Moreover, in the consolidating list 1400 shown in FIG. 14, the quality metadata aspect includes the aspects of resolution and bit rate, so does the quality metadata aspect in the consolidating list 1200.

A consolidating list 1450 in FIG. 15 is an example when the content management server 200 displays the consolidating list 1400 in FIG. 14 on the display 250. Similar to the consolidating list 1250 in FIG. 13, the consolidating list 1450 in FIG. 15 is displayed as a list indicating the aspects of thumbnail, group, program name, and channel; however, these lists are different from each other in the number of content files to be displayed. This is because the number of groups has changed in the consolidating list 1400. The consolidating list 1250 in FIG. 13 lists four content files in the groups "A" to "D". In contrast, the consolidating list 1450 in FIG. 15 lists only three content files in the groups "A" to "C". Hence when the definition of the detail metadata aspect changes, so does the organization of the content files in a consolidating list. Consequently, the number of content files to be displayed on the display 250 changes as well.

As described above, an example of a definition of the detail metadata aspect is an initial definition which is previously set when the content management server 200 is shipped out. The initial definition may be; however, freely changed at any given time after the shipment, such as after the user has started using the content management server 200. For example, the user may operate the content management server 200 via a not-shown keyboard and an infrared controller to change the definition of the detail metadata aspect. The changed definition of the detail metadata aspect is stored in the storage unit 208 of the content management server 200, and used for an analysis later by the metadata classifying unit 202 of the metadata.

As described above, the detail metadata aspect includes at least one metadata aspect, such as the file name, the capturing date and time, the capturing camera, the modification date and time, the title, the channel name, and the recording date and time of a content file. The user can control the details of a consolidating list to be displayed on the display 250 by changing the definition of the detail metadata aspect, such as defining the name of a metadata aspect indicating the details of a content file, as he or she wishes. In other words, the user can display a consolidating list of his or her preference. For example, suppose the first client device 310 stores a recorded program A. Then, suppose the same program as the recorded program A was rerun on the same channel but another day and time. The rerun program was recorded by the second client device 320 and is stored as a recorded program B. The recorded programs A and B are the same program but broadcasted on different days and times, and the user desires that the programs would be organized on a consolidating list as the same program and displayed on the display 250. Here, suppose the user is viewing the consolidating list 1200 in FIG. 12. In the consolidating list 1200 of FIG. 12, the detail metadata aspect includes the aspects of program name, channel, and recording date and time (metadata aspects). The recorded program A in first client device 310 and the recorded program B in the second client device 320 are different from each other in the aspect of recording date and time (metadata aspect), and these programs cannot be organized in the same group. This is the case of content files having the content IDs of "SID005" and "SID006" in the consolidating list 1200, for example. Here, suppose the case where the user has changed the definition of the detail metadata aspect and deleted the aspect of recording date and time (metadata aspect) from the detail metadata aspect. The consolidating list with the aspect of recording date and time deleted is the consolidating list 1400 in FIG. 14. In the consolidating list 1400 in FIG. 14, the detail metadata aspect includes the aspects of program name and channel. Hence, the recorded program A in the first client device 310 and the recorded program B in the second client device 320 are organized in the same group even though the programs are different from each other in the aspect of recording date and time (metadata aspect). This is the case of content files having the content file IDs of "SID005" and "SID006" in the consolidating list 1400, for example. Hence, the user can freely change the definition of the detail metadata aspect, and a displayed consolidating list meets the preference of the user.

Described next with reference to FIG. 16 is about a flow of processing showing how the content management server 200 creates a consolidating list based on a content file list obtained from the client device 300.

The content file list obtaining unit 201 first obtains a content file list from the client device 300 (S1601).

The metadata classifying unit 202 next obtains one content information item from the obtained content file list (S1602). Hereinafter, the one content information item is referred to as target content information item.

The metadata classifying unit 202 then analyzes the metadata in the target content information item, and extracts a detail metadata aspect, a quality metadata aspect, and another metadata aspect all of which have been previously defined (S1603). Here, the metadata classifying unit 202 marks the detail metadata aspect and the quality metadata aspect so that another constituent unit in the content management server 200 can easily refer to the aspects later.

The consolidating list creating unit 203 then compares the extracted detail metadata aspect in the target content information item with a detail metadata aspect for each of content files listed in a consolidating list which has already been created (S1604).

The flow proceeds to S1705 in the case where the consolidating list includes a content file all of which detail metadata aspects match the aspect of the target content information item (S1604: YES). Here (S1604: YES), the consolidating list creating unit 203 (i) assigns the target content information item to the same group including the content file all of which detail metadata aspects match the metadata aspects of the target content information item, and (ii) adds the target content information item to the consolidating list (S1605).

In contrast, the flow proceeds to S1606 in the case where the consolidating list does not include a content file all of which detail metadata aspects match those of the target content information item (S1604: NO). Here, in the case where the consolidating list has not been created yet, the flow proceeds to S1606 (S1604: NO). Here (S1604: NO), the consolidating list creating unit 203 (i) assigns a new group, which has not been assigned in the new consolidating list, to the target content information item, and (ii) adds the new group to the consolidating list (S1606).

Finally, the metadata classifying unit 202 determines whether or not all the content information items, included in a content file list obtained from the client device 300, have been processed (S1607).

In the case where all the content information items have been processed (S1607: YES), the processing ends. In contrast, in the case where not all content information items have been processed (S1607: NO), the flow returns to S1602 and the processing continues.

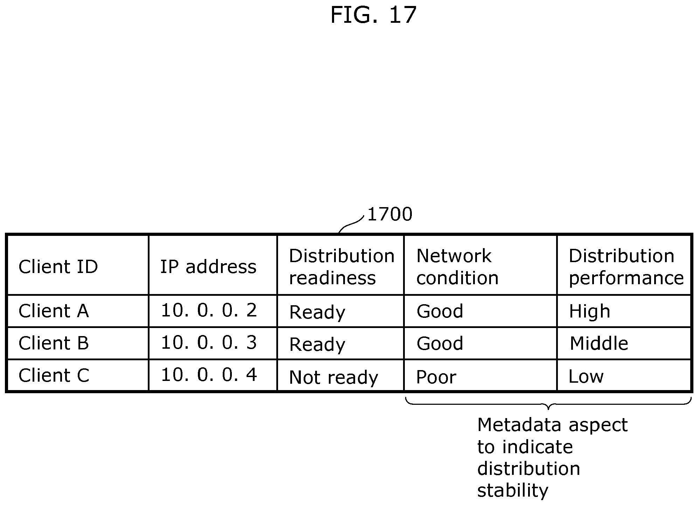

Described next is a client device managing list 1700 shown in FIG. 17.The client device managing list 1700 is a list for the client device 300 and managed by the reproduction content determining unit 204 in the content management server 200.The client device managing list 1700 includes a metadata aspect indicating either a distribution readiness state and distribution performance of the client device 300 which stores content files, or distribution stability such as a condition of the network between the client device 300 and the content management server 200. When a user selects multiple content files organized in a group from a consolidating list as targets to be reproduced, the reproduction content determining unit 204 determines which content file to be reproduced among the grouped content files, based on the quality metadata aspect of the consolidating list and the metadata aspect indicating the distribution stability listed in the client device managing list 1700.

The client device managing list 1700 in FIG. 17 includes aspects (metadata aspects) of client ID, IP address, distribution readiness, network condition, and distribution performance. The aspect of client ID shows an ID which uniquely indicates a client device 300.The aspect of IP address indicates the internet protocol (IP) address of the client device 300.The aspect of distribution readiness indicates a status showing whether or not the client device 300 is ready to distribute a content file at the moment. The reproduction content determining unit 204 periodically monitors the status of the client device 300, and updates the aspect of distribution readiness each time the status of the client device 300 changes. It is noted that whether or not the client device 300 is ready to distribute a content file can be easily determined when a tentative request for distributing a content file is transmitted to the client device 300.In the case where a response given from the client device 300 and made to the tentative request for distributing a content file is success, it is determined that the client device 300 is ready to distribute the content file. In the case where the response is failure, it is determined that that the client device 300 is not ready to distribute the content file. It is noted that a technique to tell whether or not the client device 300 is ready to distribute a content file shall not be limited to the above technique; instead, another technique as effective as the above may be used, such as using an additional interface for inquiring the status that distribution is capable.

The aspect of network condition indicates the network condition between the content management server 200 and the client device 300. The reproduction content determining unit 204 periodically measures the network condition between the content management server 200 and the client device 300, and updates the aspect of network condition each time the network condition changes. The reproduction content determining unit 204 shows "Good" when the network condition is good, and "Poor" when network condition is poor. A better network condition is more desirable for more stable content file distribution.

The network condition is determined when a round trip time (RTT) between the content management server 200 and the client device 300 is measured. In the case where the RTT is shorter than 10 ms, the reproduction content determining unit 204 determines that the network condition is good, and shows "Good" in the aspect of network condition. In the case where the RTT is longer than or equal to 10 ms, the reproduction content determining unit 204 determines that the network condition is poor, and shows "Poor" in the aspect of network condition.

It is noted that the network condition may be measured by another technique, instead of the RTT, or by a combination of the RTT and the other technique. In some cases, a measurement technique other than the RTT can obtain a more accurate measurement result, depending on the kind of the network 100. A combination of multiple calculation techniques can obtain a more accurate measurement result. Instead of the measurement technique based on the RTT, other techniques may be employed. For example, the network condition may be determined better as the bandwidth of the network 100 between the content management server 200 and the client device 300 is wider. A combination of the RTT and a bandwidth of the network may be utilized for the determination. Moreover, the network condition may include multiple stages instead of the two stages of "Good" and "Poor". Such multiple stages allows more detailed management of the network condition.

The aspect of distribution performance indicates the content file distribution performance of the client device 300. When the aspect indicates "High", "Middle", and "Low", the distribution performance is respectively high, middle, and low. Higher distribution performance is more desirable since the higher distribution performance allows the client device 300 to perform more stable distribution of a content file to be reproduced.

The distribution performance is determined based on features of the client device 300, such as the performance of the CPU and the size of a memory included in the client device 300. For example, the distribution performance is assumed be high when the CPU is as fast as 1 GHz, and a memory is larger than or equal to 512 MB. The definition of the distribution performance is previously made for the entire system; instead, the definition may be changed later. In other words, the definition may be determined based on a feature such as battery capacity other than the CPU and a memory of the client device 300.

To determine the distribution performance of the client device 300, the reproduction content determining unit 204 obtains feature information on the client device 300 from a not-shown device information distributing unit included in the client device 300. The reproduction content determining unit 204 obtains a feature of client device 300 when the content file list obtaining unit 201 obtains a content file list from the client device 300, determines the distribution performance of the client device 300, and updates the aspect of distribution performance in the client device managing list 1700. To obtain an effect similar to the above one, the not-shown device information distributing unit in the client device 300 may previously determine the distribution performance of the client device 300 and provide the distribution performance. This allows the reproduction content determining unit 204 to eliminate the need of determining distribution performance, and to obtain distribution performance directly from the client device 300.

It is noted that the metadata aspect indicating distribution stability shall not be limited to the aspects (metadata aspects) of network condition, distribution readiness, and distribution performance listed in the client device managing list 1700; instead, the metadata aspect indicating distribution stability may include another aspect (metadata aspect). In the case where the content management server 200 and the client device 300 are connected with each other via a wireless LAN, for example, the metadata aspect indicating distribution stability may include an aspect (metadata aspect) of radio field strength of the wireless LAN. Here, the aspect of radio field strength (metadata aspect) is added to the client device managing list 1700.

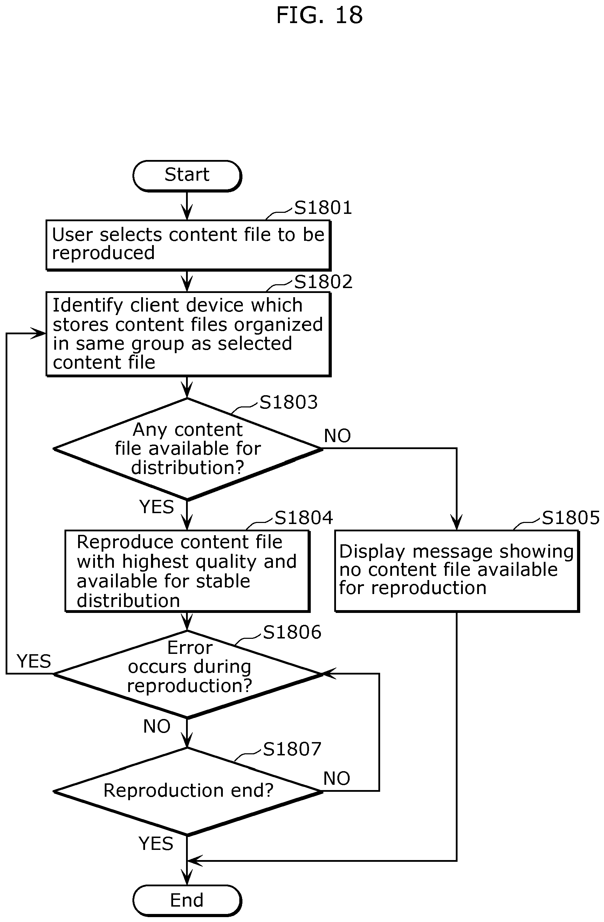

Described next with reference to FIG. 18 is about a flow of processing from the user selecting a content file to be reproduced from a consolidating list in the content management server 200 to the selected content file being reproduced on the display 250. From among multiple content files organized in the same group where a content file that the user has selected (hereinafter referred to as "selected content file") belongs, the content management server 200 determines, as a content to be reproduced, the content file with the highest quality and suitable for stable distribution, based on the quality metadata aspect of the consolidating list and the metadata aspect indicating the distribution stability listed in the client device managing list 1700.

First, the user selects a content file to be reproduced from a consolidating list displayed on the display 250 (S1801). In the embodiment, described below is an example that the user has selected from the consolidating list 600 a content file which belongs to the group "A".

Next, the reproduction content determining unit 204 in the content management server 200 identifies, based on the aspect of client ID (metadata aspect) in the consolidating list, a client device 300 which stores all the content files organized in the same group where the selected content belongs (S1802). Here, two content files of the content IDs "SID001" and "SID002" are included in the group "A" of the consolidating list 600 shown in FIG. 6. The content file of "SID001" is stored in a client device 300 whose client ID is "Client A". The content file of "SID002" is stored in a client device 300 whose client ID is "Client B".

Based on the aspect of distribution readiness (metadata aspect) in the client device managing list 1700, the reproduction content determining unit 204 next determines whether or not each of identified client devices 300 can distribute a content file (S1803). In the case where there is an available content file for distribution, the flow proceeds to S1804 (S1803: YES). In contrast, in the case where there is no content file available for distribution in S1803 (S1803: NO), the flow proceeds to S1805. The reproduction content determining unit 204 shows on the display 250 that no content file is available for reproduction (S1805), and the processing ends. It is noted that the content file available for distribution is a content file which a client device 300 storing content files can distribute.

In the embodiment, as shown in FIG. 17, both the client devices 300 whose client IDs are "Client A" and "Client B" can distribute the content files. In other words, both the content files whose content file IDs are "SID001" and "SID002" are available for distribution. Hence, the flow proceeds to S1804.

The reproduction content determining unit 204 next determines, as a content file to be reproduced, the content file with the highest quality and available for the most stable distribution. The content file reproducing unit 205 reproduces such a content file from a client device 300 and displays on the display 250 (S1804).

While reproducing the content file, the content file reproducing unit 205 checks the reproduction status of the content file (S1806).

In the case where no error occurs during the reproduction of the content file (S1806: NO), the content file reproducing unit 205 proceeds with the processing to S1807.

In the case where the reproduction of the content file ends (S1807: YES), the content file reproducing unit 205 finishes the processing. In the case where the reproduction of the content file has not ended (S1807: NO), the content file reproducing unit 205 continues to check the reproduction status of the content file (return to S1806).

In contrast, in S1806, in the case where an error occurs during the reproduction of the content file (S1806: YES), the content file reproducing unit 205 proceeds with the processing to S1802 and checks whether or not there is another content file available for reproduction and having the same details. In the case where an error occurs during the reproduction of the content file (S1806: YES) and another content files having the same details is to be reproduced again, the content file reproducing unit 205 continues to reproduce the other content file at a point where the reproduction error occurs in S1804.

It is noted that an algorithm used for the reproduction content determining unit 204 to determine the content file with the highest quality and available for the most stable distribution is an initial algorithm which is previously set when the content management server 200 is shipped out.

In the consolidating list 600 shown in FIG. 6, for example, the quality metadata aspect is resolution. In the client device managing list 1700, the metadata aspect indicating distribution stability is network condition and distribution performance. Here, the reproduction content determining unit 204 selects, as the content file with the highest quality and available for the most stable distribution, the content file having the highest resolution, found in the best network condition, and achieving the highest distribution performance. It is noted that priority is set in the order of network condition, resolution, and distribution performance. In other words, the reproduction content determining unit 204 selects the content file found in the best network condition. In the case where there are multiple content files found in the best network condition, the reproduction content determining unit 204 selects the content file having the highest resolution. In the case where there are multiple content files assuming the best network condition and having the highest resolution, the reproduction content determining unit 204 selects the content file achieving the highest distribution performance.

In addition, in the consolidating list 1200 shown in FIG. 12, for example, the quality metadata aspect is resolution and bit rate. Here, the reproduction content determining unit 204 selects, as the content file with the highest quality and available for the most stable distribution, the content file having the highest resolution, having the highest bit rate, assuming the best network condition, and achieving the highest distribution performance. It is noted that priority is set in the order of network condition, resolution, bit rate, and distribution performance.

Described hereinafter is a specific implementation of the processing in FIG. 18. The processing is carried out when, for example, the user selects a content file to be reproduced from the consolidating list 650 in FIG. 7.

First, from the consolidating list 650 displayed on the display 250, the user selects a content file which belongs to the group "A" as the content to be reproduced (S1801).

Next, the reproduction content determining unit 204 confirms that (i) there are two content files, or the content files having the content file IDs of "SID001" and "SID002", which belong to the group "A" in the consolidating list 600 corresponding to the consolidating list 650, and (ii) the content file of "SID001" is stored in a client device 300 having the client ID of "Client A" and the content file of "SID002" is stored in a client device 300 having the client ID of "Client B" (S1802).

With reference to the client device managing list 1700, the reproduction content determining unit 204 then confirms that both the client devices 300 whose client IDs are "Client A" and "Client B" are ready to distribute the content files (S1803: YES). In other words, both the content files whose content file IDs are "SID001" and "SID002" are available for distribution (S1803: YES). Hence, the flow proceeds to S1804.

The reproduction content determining unit 204 next determines the content file with the highest quality and available for the most stable distribution. Here, the content file whose content ID is "SID001" has the resolution of "4000 pixels in width and 3000 pixels in height", and the client device 300 that stores the content file is in the network condition of "Good" and achieves the distribution performance of "High". The content file whose content ID is "SID002" has the resolution of "2000 pixels in width and 1500 pixels in height", and the client device 300 that stores the content file is in the network condition of "Good" and achieves the distribution performance of "Middle". The reproduction content determining unit 204 first checks a network condition of each of the content files. Both the content files are in the network condition of "Good", and the reproduction content determining unit 204 next checks the resolution of each content file. The check shows that the content file having the content file ID of "SID001" has higher resolution than the other has. Hence, the reproduction content determining unit 204 determines that the content file having the content file ID of "SID001" is the one with the highest quality and available for the most stable distribution. The content file reproducing unit 205 then reproduces from the client device 300 the content file having the content ID of "SID001", and shows the content file on the display 250 (S1804).

While reproducing the content file, the content file reproducing unit 205 checks the reproduction status of the content file (S1806). Here, suppose an error occurs during the reproduction of the content file having the content file ID of "SID001" (S1806: YES). The flow proceeds to S1802.

In S1802, the reproduction content determining unit 204 confirms that two content files of the content IDs "SID001" and "SID002" are included in the group "A" of the consolidating list 600. The content file of "SID001" is stored in the client device 300 whose client ID is "Client A". The content file of "SID002" is stored in the client device 300 whose client ID is "Client B. With reference to the client device managing list 1700, the reproduction content determining unit 204 then confirms that only the client device 300 having the client ID of "Client B" is ready to distribute content file (S1803: YES). In other words, the content file having the content file ID of "SID002" is available for distribution (S1803: YES). Hence, the flow proceeds to S1804.

Since there is only one content file available for reproduction, the reproduction content determining unit 204 then determines the content file having the content file ID of "SID002" as a content file to be reproduced. The content file reproducing unit 205 then reproduces from the client device 300 the content file having the content ID of "SID002", and shows the content file on the display 250 (S1804). It is noted that the content file reproducing unit 205 reproduces the content file at a point where the reproduction error has occurred (reproduction point) while reproducing the content file having the content file ID of "SID001".

While reproducing the content file, the content file reproducing unit 205 checks the reproduction status of the content file (S1806). Here, suppose the reproduction of the content file having the content ID of "SID002" ends without an error. Since no error has occurred during the reproduction (S1806: NO), the flow proceeds to S1807. The content file reproducing unit 205 finishes the reproduction of the content file (S1807: YES), and the processing ends.

It is noted that an algorithm used for the reproduction content determining unit 204 to determine the content file with the highest quality and available for the most stable distribution is an initial algorithm which is previously set when the content management server 200 is shipped out. The initial algorithm may be, however, freely changed after the shipment. For example, the user may operate the content management server 200 via a not-shown keyboard and an infrared controller to change the algorithm. The changed algorithm is set in the reproduction content determining unit 204 of the content management server 200. The change of an algorithm allows the user to select a content file of his or her preference.

For example, in the case where the set initial algorithm causes the reproduction content determining unit 204 to select, as the content file with the highest quality and available for the most stable distribution, the content having the highest resolution, found in the best network condition, and achieving the highest distribution performance, the user can change the initial algorithm to cause the reproduction content determining unit 204 to select the content file having the highest resolution and found in the best network condition. Moreover, the priority can be changed in the order of resolution and network condition. Similarly, the user can change the algorithm to cause the reproduction content determining unit 204 to select the content file having the lowest resolution and found in the best network condition. In the case where the display 250 is low in resolution and the content management server 200 is low in reproduction capability, the user can change the algorithm so that the content file having the lowest resolution is selected. This allows the user to select a content file more suitable to the user environment.

As described above, an example of a definition of the detail metadata aspect on a consolidating list is an initial definition which is previously set when the content management server 200 is shipped out. The initial definition may be; however, freely changed at any given time after the shipment, such as after the user has started using the content management server 200. For example, the user may operate the content management server 200 via a not-shown keyboard and an infrared controller to change the definition of the quality metadata aspect by changing the name of a metadata aspect. The changed definition of the quality metadata aspect is stored in the storage unit 208 of the content management server 200, and used for an analysis later by the metadata classifying unit 202 of the metadata.

Here, for example, there is a not-shown aspect of content file compression algorithm on the content file list 1000 in FIG. 10 and the content file list 1100 in FIG. 11. The user may additionally define the aspect of content file compression algorithm as the quality metadata aspect, and add the defied aspect as a quality metadata aspect to the consolidating list 1200 and the consolidating list 1400. Compared with a conventional content file compression algorithm, such as MPEG-2, the latest content file compression algorithm, such as H.264, can generate a content file having higher quality at a lower bit rate. Hence, compared with the case where resolution and bit rate alone are defined as the quality metadata aspect, including a content compression algorithm as a quality metadata aspect can indicate the quality of a content file more accurately.

It is noted that when the definition of the quality metadata aspect is changed above, the user also has to change an algorithm for the reproduction content determining unit 204 to determine the content file with the highest quality and available for the most stable distribution in S1804. Hence, the user can set the definition of the quality metadata aspect as he or she wishes and select in S1804 a content file which meets his or her preference.

Although only an exemplary embodiment of this invention has been described in detail above, those skilled in the art will readily appreciate that many modifications are possible in the exemplary embodiment without materially departing from the novel teachings and advantages of this invention. Accordingly, all such modifications are intended to be included within the scope of this invention.

For example, metadata which the metadata classifying unit 202 analyzes may be either previously assigned to a content file or newly assigned to a content file based on the result of analyzing the content file.

In the above embodiment, the definition information that the metadata classifying unit 202 uses for the analysis of the metadata is previously set as the initial definition when the content management server 200 is shipped out. The user may freely change the definition information at any given time after the shipment. The definition information, however, does not have to be set as the initial definition at the time of shipment. Based on a user input, the initial definition may be set when the user starts to use the content management server 200. Moreover, the definition information may be obtained from another device connected to the content management server 200 and from a removable recording medium when the user starts to use the content management server 200 or anytime after the shipment, and stored in the storage unit 208.

Moreover, any one of the client devices 300 may also operate as the content management server 200. For example, the above content management server 200 may operate as a client device and include a content file list. Here, the content management server 200 may obtain content file lists from devices including the content management server 200 itself, and consolidate the obtained files.

Moreover, there are examples other than the ones in the embodiment to show a consolidating list on the display 250. Described hereinafter are the other examples.

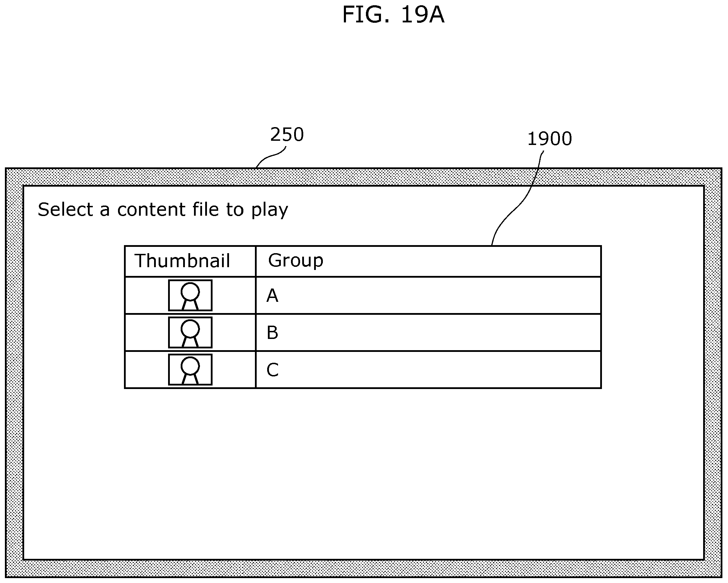

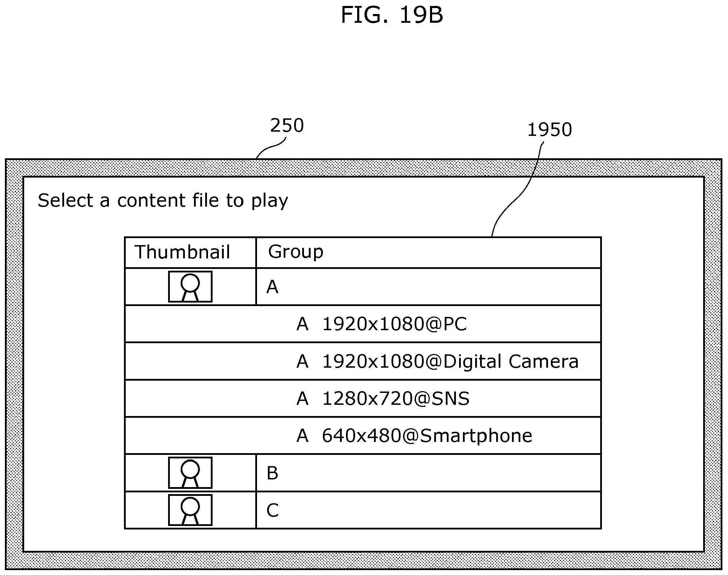

FIGS. 19A and 19B show other examples of how consolidating lists are displayed. FIG. 19A shows that the groups "A", "B", and "C", which include the same details, are displayed on a consolidating list 1900 based on the detail metadata aspect. A consolidating list 1950 in FIG. 19B shows the case where the group "A" is selected on the display in FIG. 19A and four content files included in the group "A" appear on the drop down list. The consolidating list 1950 in FIG. 19B shows where the content files included in the group "A" are stored with what resolutions. The kinds of devices and the names of external services indicate where the content files are stored. Such display control allows the user to easily understand what kind of content files are present with what details and, in addition, that content files having the same details are present in which device and with what quality.

In order to implement the display examples in FIGS. 19A and 19B, for example, the client device managing list 1700 in FIG. 17 may additionally manage information on a server providing an external service such as a social networking service (SNS). Moreover, in addition to information on an IP address and distribution stability, the client device managing list 1700 in FIG. 17 may manage information on the kind of a device and the name of an external service in relation to the IP address and the distribution stability.

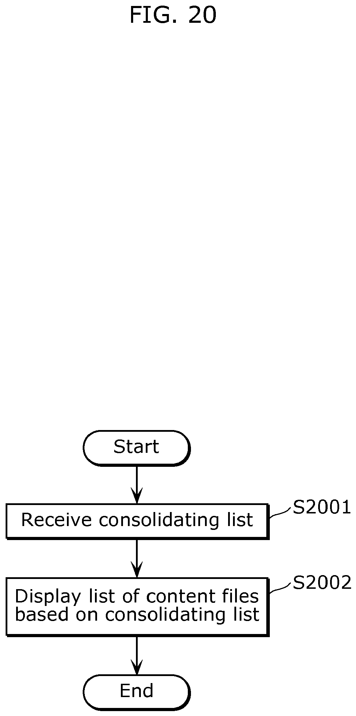

Furthermore, the display examples in FIGS. 19A and 19B may be shown on a client device 300. In other words, according to the processing flow in FIG. 20, the client device 300 may include the display 250 to show the display examples of the consolidating lists shown in FIGS. 19A and 19B. FIG. 20 depicts a flowchart showing an example of how a client device displays a consolidating list.

To be more specific, the client device 300 first receives a consolidating list (S2001). The consolidating list groups and consolidates the lists of AV content files, based on metadata aspects of the AV content files classified into one or more groups. In the embodiment, the consolidating list is received by, for example, the communications control unit 312.

Based on the received consolidating list, the client device 300 next displays a list of AV content files (S2002). Here, as shown in FIG. 19A, the client device 300 causes the display 250 to show a list corresponding only one of AV content files grouped in the same group.

It is noted that, in the embodiment, the communications control unit 312 or a not-shown display control unit may cause the display 250 to show the list.

Furthermore, when the user further selects in S2002 a list corresponding to only one of the grouped AV content files grouped in the same group shown on the display 250, the client device 300 may display the AV content files grouped in the same group on a drop-down list as shown in FIG. 19B.

Part or all of the constituent elements constituting the content management server according to the above embodiment may be configured from a single System-LSI (Large-Scale Integration). For example, the content management server may be configured from a system LSI into which the metadata classifying unit 202 and the consolidating list creating unit 203 are integrated.

The System-LSI is a super-multi-function LSI manufactured by integrating constituent units on one chip. Specifically, the System-LSI is a computer system including a microprocessor, a ROM, a RAM, or by means of a similar device. The ROM stores a computer program. The System-LSI performs its functions through the microprocessor's operation according to the computer program.

Furthermore, here, System-LSI is mentioned but there are instances where, due to a difference in the degree of integration, the designations IC, LSI, super LSI, and ultra LSI are used. Furthermore, the means for circuit integration is not limited to the LSI, and implementation in the form of a dedicated circuit or a general-purpose processor is also available. In addition, it is also acceptable to use a Field Programmable Gate Array (FPGA) that is programmable after the LSI has been manufactured, and a reconfigurable processor in which connections and settings of circuit cells within the LSI are reconfigurable.

Furthermore, if an integrated circuit technology that replaces the LSI appears thorough the progress in the semiconductor technology or an other derived technology, that technology can naturally be used to carry out integration of the constituent elements. Biotechnology can be applied to the integrated circuit technology.

In addition, the present invention may be implemented not only as a moving image indexing apparatus including the above characteristic processing units but also as a moving image indexing method including the characteristic processing units included in the moving image indexing apparatus in the form of steps. Moreover, the present invention may be implemented as a computer program causing a computer to execute the characteristic steps included in the above method. As a matter of course, the computer program may be distributed via a non-transitory computer-readable recording medium such as a CD-ROM and a transmission medium such as the Internet.

### [Industrial Applicability]

A content management apparatus according to an implementation of the present invention is useful as a device such as a content management server for obtaining content file lists from multiple client devices and consolidating the content file lists.

### [Reference Signs List]

100 Network
200 Content management server
201 Content file list obtaining unit
202 Metadata classifying unit
203 Consolidating list creating unit
204 Reproduction content file determining unit
205 Content file reproducing unit
206 Communications control unit
207 Display control unit
208 Storage unit
250 Display
310 First client device
311 Content file list creating unit
312 Communications control unit
313 Storage unit
320 Second client device
400, 500, 1000, and 1100 Content file list
600, 650, 800, 850, 1200, 1250, 1400, 1450, 1900, and 1950 Consolidating list
1700 Client device managing list

## Claims

1. A content management apparatus (200) which manages a list of audio and visual (AV) content files stored in a plurality of devices external to said content management apparatus, including at least one of an image, audio, and a moving image, and including metadata aspects of the content files, the content management apparatus comprising:
a microprocessor, the microprocessor integrating:
a metadata classifying unit (202) configured to classify the metadata aspects of the AV content files included in the lists obtained from said external devices into a detail metadata aspect group indicating details of the AV content files, a quality metadata aspect group indicating reproduction quality of the AV content files, and a group including metadata aspects other than said detail metadata aspects and said quality metadata aspects; and
a consolidating list creating unit (203) configured to create a consolidating list departing from said lists obtained from said plural external devices, wherein:
1) the AV content files having a user-defined common set of said detail metadata aspects whose values match each other, are grouped into a same group of files; and
2) the list displays only one representing AV content file for each of the formed groups of AV files; and
an output unit configured to output said created consolidating list on a display (250).

2. The content management apparatus according to claim 1,
wherein the detail metadata aspect includes at least one of the metadata aspects of the AV content files including file name, capturing date and time, capturing camera, modification date and time, title, channel name, and recording date and time.

3. The content management apparatus according to Claim 1
further comprising
a reproduction content file determining unit configured to determine an AV content file to be reproduced from among two or more AV content files grouped in a single group and included in the AV content files listed on the consolidating list created by the consolidating list creating unit, based on values indicated in a metadata aspect included in quality metadata aspects each quality metadata aspect corresponding to one of the two or more AV content files.

4. The content management apparatus according to claim 3,
wherein the quality metadata aspect includes at least one of the metadata aspects of the AV content files including resolution and bit rate.

5. The content management apparatus according to Claim 1, further comprising
a reproduction content file determining unit configured to determine an AV content file to be reproduced from among two or more AV content files grouped in a single group and included in the AV content files listed on the consolidating list created by the consolidating list creating unit, based on information on distribution stability of devices each storing one of the two or more AV content files.

6. The content management apparatus according to Claim 5,
wherein the information on the distribution stability indicates at least one of performance and a status of each of the devices corresponding to the content management apparatus.

7. The content management apparatus according to Claim 5, wherein the information on the distribution stability indicates a status of a network between the content management apparatus and each of the devices corresponding to the content management apparatus.

8. The content management apparatus according to Claim 1,
wherein the output unit further includes a content file reproducing unit configured to reproduce an AV content file included in the AV content files and listed on the consolidating list, and
when an error occurs during the reproduction of an AV content file, the content file reproducing unit is configured to reproduce, based on the detail metadata aspect, an other AV content file which belongs to a same group as the AV content file belongs to and differs from the AV content file.

9. The content management apparatus according to Claim 8,
wherein the content file reproducing unit is configured to start reproduction of the other AV content file at a point corresponding to a point of the error in the AV content file under the reproduction.

10. The content management apparatus according to Claim 1,
wherein the metadata classifying unit is configured to classify the metadata aspects of the AV content files, based on definition information which defines a name for each of the metadata aspects indicating at least the details of the AV content files, and
the definition information is to be changed at any given time.

11. The content management apparatus according to Claim 1, further comprising
a display control unit configured to perform control for displaying the consolidating list on a display.

12. A content management method performed by a content management apparatus (200) for managing a list of audio and visual (AV) content files stored in a plurality of devices external to said content management apparatus, including at least one of an image, audio, and a moving image, and including metadata aspects of the content files, the content management method comprising:
classifying, by the content management apparatus (200), metadata aspects of the AV content files included in the lists obtained from said external devices into a detail metadata aspect group indicating details of the AV content files, a quality metadata aspect group indicating reproduction quality of the AV content files, and a group including metadata aspects other than said detail metadata aspects and said quality metadata aspects;
creating a consolidating list departing from said lists obtained from said plural external devices, wherein:
1) the AV content files having a user-defined common set of said detail metadata aspects whose values match each other, are grouped into a same group of files; and
2) the list displays only one representing AV content file for each of the formed groups of AV files; and
outputting said created consolidating list on a display (250).

13. A computer program that when executed on a computer causes said computer to execute the steps of the content management method according to Claim 12.

14. A content list display method comprising:
receiving, by a communications control unit (312), a consolidating list which is created according to the content management method of claim 12; and
displaying on a display (250) the received consolidating list.

15. The content display method comprising according to Claim 14,
wherein when a file corresponding to the one of the grouped content files is selected, the displaying includes displaying on a drop-down list the AV content files grouped in the same group.

## Patentansprüche

1. Inhaltsverwaltungsvorrichtung (200), die eine Liste von Audio- und visuellen (AV) Inhaltsdateien verwaltet, die in mehreren Geräten extern von der Inhaltsverwaltungsvorrichtung gespeichert sind, wobei die Inhaltsverwaltungsvorrichtung mindestens eines von einem Bild, Audio und einem beweglichen Bild enthält und Metadatenaspekte der Inhaltsdateien enthält, wobei die Inhaltsverwaltungsvorrichtung Folgendes aufweist:
einen Mikroprozessor, wobei der Mikroprozessor integriert:
eine Metadatenklassifizierungseinheit (202), die konfiguriert ist zum Klassifizieren von Metadatenaspekten der AV-Inhaltsdateien, die in den von den externen Geräten erhaltenen Listen enthalten sind, in eine Detailmetadatenaspektgruppe, die Details der AV-Inhaltsdateien anzeigt, eine Qualitätsmetadatenaspektgruppe, die der Reproduktionsqualität der AV-Inhaltsdateien anzeigt, und eine Gruppe einschließlich die Metadatenaspekte andere als die Detailmetadatenaspekte und die Qualitätsmetadatenaspekte, und
eine Konsolidierungslistenerstellungseinheit (203), die konfiguriert ist für ein Erstellen einer Konsolidierungsliste, die von den von den mehreren externen Geräten erhaltenen Listen abweichen, wobei:
1) die AV-Inhaltsdateien einen benutzerdefinierten allgemeinen Satz der Detailmetadatenaspekte, deren Werte miteinander übereinstimmen, in ein und die gleiche Gruppe von Dateien gruppiert werden; und
2) die Liste für jede der gebildeten Gruppen von AV-Dateien nur eine repräsentierende AV-Inhaltsdatei anzeigt; und
eine Ausgabeeinheit, die konfiguriert ist für eine Ausgabe der Konsolidierungsliste auf einem Anzeigegerät (250).

2. Inhaltsverwaltungsvorrichtung nach Anspruch 1,
wobei der Detailmetadatenaspekt mindestens einen der Metadatenaspekte der AV-Inhaltsdateien einschließlich Dateiname, Erfassungsdatum und -zeit, Erfassungskamera, Änderungsdatum und -zeit, Titel, Kanalname und Aufnahmedatum und -zeit enthält.

3. Inhaltsverwaltungsvorrichtung nach Anspruch 1, ferner aufweisend:
eine Reproduktionsinhaltsdatei-Bestimmungseinheit, die konfiguriert ist, um, auf Basis von Werten, die in einem Metadatenaspekt, der in Qualitätsmetadatenaspekten enthalten ist, angezeigt sind, eine AV-Inhaltsdatei unter zwei oder mehreren in einer einzelnen Gruppe gruppierten und in der von der Konsolidierungslistenerstellungseinheit erstellten Konsolidierungsliste enthaltenen AV-Inhaltsdateien zum Reproduzieren zu bestimmen, wobei jeder Qualitätsmetadatenaspekt einer von den zwei oder den mehreren AV-Inhaltsdateien entspricht.

4. Inhaltsverwaltungsvorrichtung nach Anspruch 3,
wobei der Qualitätsmetadatenaspekt mindestens einen der Metadatenaspekte der AV-Inhaltsdateien einschließlich Auflösung und Bitrate enthält.

5. Inhaltsverwaltungsvorrichtung nach Anspruch 1, ferner aufweisend:
eine Reproduktionsinhaltsdatei, die konfiguriert ist, um, auf Basis von Information über Verteilungsstabilität von jeder der einen von den zwei oder mehreren AV-Inhaltsdateien speichernden Geräte, eine AV-Inhaltsdatei unter zwei oder mehreren in einer einzelnen Gruppe gruppierten und in der von der Konsolidierungslistenerstellungseinheit erstellten Konsolidierungsliste enthaltenen AV-Inhaltsdateien zum Reproduzieren zu bestimmen.

6. Inhaltsverwaltungsvorrichtung nach Anspruch 5,
wobei die Information über die Verteilungsstabilität mindestens eines von Leistung und einem Status von jedem der Geräte, die mit der Inhaltsverwaltungsvorrichtung übereinstimmen, anzeigt.

7. Inhaltsverwaltungsvorrichtung nach Anspruch 5,
wobei die Information über die Verteilungsstabilität einen Status eines Netzwerks zwischen der Inhaltsverwaltungsvorrichtung und jedem der Geräte, die mit der Inhaltsverwaltungsvorrichtung übereinstimmen, anzeigt.

8. Inhaltsverwaltungsvorrichtung nach Anspruch 1,
wobei die Ausgabeeinheit ferner eine Inhaltsdateireproduktionseinheit aufweist, die zum Reproduzieren einer in den AV-Inhaltsdateien enthaltenen und in der Konsolidierungsliste gelisteten AV-Inhaltsdatei konfiguriert ist, und
wenn während des Reproduzierens einer AV-Inhaltsdatei ein Fehler auftritt, ist die Inhaltsdateireproduktionseinheit konfiguriert, um, auf Basis des Detailmetadatenaspekts, eine andere AV-Inhaltsdatei zu reproduzieren, die zu einer gleichen Gruppe wie die AV-Inhaltsdatei gehört und sich von der AV-Inhaltsdatei unterscheidet.

9. Inhaltsverwaltungsvorrichtung nach Anspruch 8,
wobei die Inhaltsdateireproduktionseinheit konfiguriert ist, um die Reproduktion der anderen AV-Inhaltsdatei an einem Punkt zu beginnen, der dem Punkt des Fehlers in der AV-Inhaltsdatei entspricht, die sich in der Reproduktion befindet.

10. Inhaltsverwaltungsvorrichtung nach Anspruch 1,
wobei die Metadatenklassifizierungseinheit konfiguriert ist zum Klassifizieren der Metadatenaspekte der AV-Inhaltsdateien auf Basis von Definitionsinformation, die für jeden Metadatenaspekt einen mindestens die Details der AV-Inhaltsdateien anzeigenden Namen definiert, und
die Definitionsinformation zu jedem vorgegeben Zeitpunkt geändert werden muss.

11. Inhaltsverwaltungsvorrichtung nach Anspruch 1, ferner aufweisend:
eine Anzeigesteuerungseinheit, die zum Ausführen einer Steuerung zur Anzeige der Konsolidierungsliste auf einer Anzeigevorrichtung konfiguriert ist.

12. Inhaltsverwaltungsverfahren, ausgeführt von einer Inhaltsverwaltungsvorrichtung (200), zum Verwalten einer Liste von Audio- und visuellen (AV) Inhaltsdateien, die in mehreren Geräten extern von der Inhaltsverwaltungsvorrichtung gespeichert sind, welche mindestens eines von einem Bild, Audio und einem beweglichen Bild enthält und Metadatenaspekte der Inhaltsdateien enthält, wobei das Inhaltsverwaltungsverfahren Folgendes umfasst:
Klassifizieren, durch die Inhaltsverwaltungsvorrichtung (200), von Metadatenaspekten der AV-Inhaltsdateien, die in den von den externen Geräten erhaltenen Listen enthalten sind, in eine Detailmetadatenaspektgruppe, die Details der AV-Inhaltsdateien anzeigt, eine Qualitätsmetadatenaspektgruppe, die der Reproduktionsqualität der AV-Inhaltsdateien anzeigt, und eine Gruppe einschließlich die Metadatenaspekte andere als die Detailmetadatenaspekte und die Qualitätsmetadatenaspekte;
Erstellen einer Konsolidierungsliste, die von den von den mehreren externen Geräten erhaltenen Listen abweichen, wobei:
1) die AV-Inhaltsdateien einen benutzerdefinierten allgemeinen Satz von Detailmetadatenaspekten, deren Werte miteinander übereinstimmen, in ein und die gleiche Gruppe von Dateien gruppiert werden; und
2) die Liste für jede der gebildeten Gruppen von AV-Dateien nur eine repräsentierende AV-Inhaltsdatei anzeigt; und Ausgabe der Konsolidierungsliste auf einem Anzeigegerät (250).

13. Computerprogramm, das bei Ausführen durch einen Computer den Computer zum Ausführen der Schritte des Inhaltsverwaltungsverfahrens nach Anspruch 12 veranlasst.

14. Inhaltslistenanzeigeverfahren, umfassend:
Empfangen, über eine Kommunikationssteuereinheit (312), einer Konsolidierungsliste, die nach dem Inhaltsverwaltungsverfahren nach Anspruch 12 erstellt wird; und
Anzeigen, auf einer Anzeigevorrichtung (250), der empfangenen Konsolidierungsliste.

15. Inhaltsanzeigeverfahren nach Anspruch 14,
wobei, wenn eine Datei in Übereinstimmung mit der einen der gruppierten Inhaltsdateien gewählt wird, das Anzeigen ein Anzeigen der in der gleichen Gruppe gruppierten AV-Inhaltsdateien in einer Dropdownliste umfasst.

## Revendications

1. Dispositif de gestion de contenu (200) qui gère une liste de fichiers de contenus audiovisuels (AV) stockés dans une pluralité de dispositifs externes audit dispositif de gestion de contenu, qui comprend au moins l'un d'une image, d'audio, et d'une image en mouvement, et qui comprend les métadonnées des fichiers de contenus, le dispositif de gestion de contenu comprenant :
un microprocesseur, qui comprend :
une unité de classification de métadonnées (202) configurée pour classifier les métadonnées des fichiers de contenus audiovisuels inclus dans les listes obtenues de la part desdits dispositifs externes dans un groupe de métadonnées de détails qui indiquent les détails des fichiers de contenus audiovisuels, un groupe de métadonnées de qualité qui indiquent la qualité de reproduction des fichiers de contenus audiovisuels, et un groupe qui comprend des métadonnées autres que lesdites métadonnées de détails et lesdites métadonnées de qualité ;
une unité de création de liste de consolidation (203) configurée pour créer une liste de consolidation qui se distingue desdites listes obtenues de la part desdits dispositifs externes, dans laquelle :
1) les fichiers de contenus audiovisuels qui présentent un ensemble commun et défini par l'utilisateur desdites métadonnées de détails dont les valeurs correspondent les unes aux autres sont regroupés dans un même groupe de fichiers ; et
2) la liste affiche un seul fichier de contenus audiovisuels représentatif pour chacun des groupes de fichiers audiovisuels formés ;
une unité de sortie configurée pour afficher ladite liste de consolidation créée sur un écran (250).

2. Dispositif de gestion de contenu selon la revendication 1,
dans lequel les métadonnées de détails comprennent au moins l'une des métadonnées des fichiers de contenus audiovisuels qui comprennent le nom du fichier, la date et l'heure de capture, l'appareil photo de capture, la date et l'heure de modification, le titre, le nom du canal, et la date et l'heure d'enregistrement.

3. Dispositif de gestion de contenu selon la revendication 1, qui comprend en outre
une unité de détermination de fichier de contenu de reproduction configurée pour déterminer un fichier de contenus audiovisuels à reproduire parmi deux fichiers de contenus audiovisuels ou plus regroupés dans un seul groupe et inclus dans les fichiers de contenus audiovisuels qui apparaissent dans la liste de consolidation créée par l'unité de création de liste de consolidation, sur la base des valeurs indiquées dans une métadonnée incluse dans les métadonnées de qualité, chaque métadonnée de qualité correspondant à l'un des deux fichiers de contenus audiovisuels.

4. Dispositif de gestion de contenu selon la revendication 3,
dans lequel les métadonnées de qualité comprennent au moins l'une des métadonnées des fichiers de contenus audiovisuels qui comprennent une résolution et un débit binaire.

5. Dispositif de gestion de contenu selon la revendication 1, qui comprend en outre
une unité de détermination de fichier de contenu de reproduction configurée pour déterminer un fichier de contenus audiovisuels à reproduire parmi deux fichiers de contenus audiovisuels ou plus regroupés dans un seul groupe et inclus dans les fichiers de contenus audiovisuels qui apparaissent dans la liste de consolidation créée par l'unité de création de liste de consolidation, sur la base d'informations sur la stabilité de répartition des dispositifs qui stockent chacun l'un des deux fichiers de contenus audiovisuels ou plus.

6. Dispositif de gestion de contenu selon la revendication 5,
dans lequel les informations sur la stabilité de répartition indiquent au moins l'un d'une performance et d'un statut de chacun des dispositifs qui correspondent au dispositif de gestion de contenu.

7. Dispositif de gestion de contenu selon la revendication 5,
dans lequel les informations sur la stabilité de répartition indiquent un statut d'un réseau entre le dispositif de gestion de contenu et chacun des dispositifs qui correspondent au dispositif de gestion de contenu.

8. Dispositif de gestion de contenu selon la revendication 1,
dans lequel l'unité de sortie comprend en outre une unité de reproduction de fichier de contenu configurée pour reproduire un fichier de contenus audiovisuels inclus dans les fichiers de contenus audiovisuels et qui apparaît dans la liste de consolidation, et
lorsqu'une erreur se produit pendant la reproduction d'un fichier de contenus audiovisuels, l'unité de reproduction de fichier de contenu est configurée pour reproduire, sur la base des métadonnées de détails, un autre fichier de contenus audiovisuels qui appartient à un même groupe que le fichier de contenus audiovisuels, et qui diffère du fichier de contenus audiovisuels.

9. Dispositif de gestion de contenu selon la revendication 8,
dans lequel l'unité de reproduction de fichier de contenu est configurée pour lancer la reproduction de l'autre fichier de contenus audiovisuels à un point qui correspond à un point de l'erreur dans le fichier de contenus audiovisuels reproduit.

10. Dispositif de gestion de contenu selon la revendication 1,
dans lequel l'unité de classification de métadonnées est configurée pour classifier les métadonnées des fichiers de contenus audiovisuels, sur la base d'informations de définition qui définissent un nom pour chacune des métadonnées qui indiquent au moins les détails des fichiers de contenus audiovisuels, et
les informations de définition doivent être modifiées à n'importe quel moment donné.

11. Dispositif de gestion de contenu selon la revendication 1, qui comprend en outre
une unité de commande d'affichage configurée pour exécuter une commande d'affichage de la liste de consolidation sur un écran.

12. Procédé de gestion de contenu exécuté par un dispositif de gestion de contenu (200) afin de gérer une liste de fichiers de contenus audiovisuels (AV) mémorisés dans une pluralité de dispositifs externes audit dispositif de gestion de contenu, qui comprend au moins l'un d'une image, d'audio et d'une image en mouvement, et qui comprend les métadonnées des fichiers de contenus, le procédé de gestion de contenu comprenant :
la classification, par le dispositif de gestion de contenu (200), des métadonnées des fichiers de contenus audiovisuels inclus dans les listes obtenues de la part desdits dispositifs externes dans un groupe de métadonnées de détails qui indiquent les détails des fichiers de contenus audiovisuels, un groupe de métadonnées de qualité qui indiquent la qualité de reproduction des fichiers de contenus audiovisuels, et un groupe qui comprend des métadonnées autres que lesdites métadonnées de détails et lesdites métadonnées de qualité ;
la création d'une liste de consolidation qui se distingue desdites listes obtenues de la part desdits dispositifs externes, dans laquelle :
1) les fichiers de contenus audiovisuels qui présentent un ensemble commun et défini par l'utilisateur desdites métadonnées de détails dont les valeurs correspondent les unes aux autres sont regroupés dans un même groupe de fichiers ; et
2) la liste affiche un seul fichier de contenus audiovisuels représentatif pour chacun des groupes de fichiers audiovisuels formés ;
l'affichage de ladite liste de consolidation créée sur un écran (250).

13. Programme informatique qui, lorsqu'il est exécuté sur un ordinateur, permet audit ordinateur d'exécuter les étapes du procédé de gestion de contenu selon la revendication 12.

14. Procédé d'affichage de contenu qui comprend :
la réception, par une unité de contrôle de communications (312), d'une liste de consolidation qui est créée selon le procédé de gestion de contenu selon la revendication 12 ;
l'affichage, sur un écran (250), de la liste de consolidation reçue.

15. Procédé d'affichage de contenu selon la revendication 14,
dans lequel, lorsqu'un fichier qui correspond à l'un des fichiers de contenus regroupés est sélectionné, l'affichage comprend l'affichage, dans une liste déroulante, des fichiers de contenus audiovisuels regroupés dans le même groupe.
